(19) Europäisches Patentamt / European Patent Office / Office européen des brevets

(11) **EP 4 407 497 A1**

(12) **EUROPEAN PATENT APPLICATION**

(43) Date of publication:
**31.07.2024 Bulletin 2024/31**

(21) Application number: **23150284.0**

(22) Date of filing: **24.01.2023**

(51) International Patent Classification (IPC):
**G06F 21/62** (2013.01)  **H04L 9/40** (2022.01)

(52) Cooperative Patent Classification (CPC):
**H04L 63/0407; G06F 21/6254**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **British Telecommunications public limited company**
**London E1 8EE (GB)**

(72) Inventor: **The designation of the inventor has not yet been filed**

(74) Representative: **British Telecommunications public limited company**
**Intellectual Property Department**
**9th Floor**
**One Braham**
**Braham Street**
**London E1 8EE (GB)**

(54) **PRIVACY-CONTROLLED ANALYTICS SERVICE**

(57) A computer-implemented method is provided for performing privacy controlled data analytics. The method is performed by a computer system configured to provide incoming anonymized data to a plurality of different analysis functions for analyzing the data, each analysis function having its own set of requirements for data attributes that need to be available in the incoming data, the incoming data originating from a plurality of data sources and being anonymized by applying one or more of a plurality of predetermined anonymization protocols. The method comprises: determining one or more attributes present in the incoming data that will be processed by the computer system; determining the analysis functions that are capable of being implemented based on the determined one or more attributes of the incoming data and the data attribute requirements for the analysis functions; determining the data attributes of the incoming data that can be anonymised whilst preserving data utility based on the requirements of the analysis functions; determining, for each of a plurality of privacy settings, a privacy score and a data utility score, each privacy setting comprising a unique combination of analysis function, anonymization protocol applied to the data, anonymization protocol parameter value and data attribute; receiving input selecting a desired privacy setting; and processing an anonymized set of data, anonymized according to an identified anonymization protocol, according to the analysis function associated with the selected privacy setting. A corresponding computer system and computer program are also provided.

Fig 5

**Description**

TECHNICAL FIELD

The invention relates to a computer implemented method for performing privacy controlled data analytics. A corresponding computer system and computer program are also provided.

BACKGROUND

Various types and models of devices such as WiFi-routers, PCs, smartphones or IoT devices (e.g. IP cameras, smart thermostats, etc.) may be connected to the same network environment at home or at a business premises. As those devices are connected to the Internet they may become subjects to some form of cyber-attack with or without any user interventions. Merging and aggregating all the network traffic data related to those devices can be very useful to help monitor the network health and detect anomalous behaviours or malicious activities within the network. This allows the users to protect their network and devices against potential cyber-attacks and raise awareness of existing vulnerabilities and emerging security threats. Such security analytics services can be performed in the cloud or at network edges and managed by service or network providers. In order to comply with the regional or national data protection and privacy law the service customers (or data owners) need to consent to the provisioning of their data (i.e. data ingestion) to the corresponding analytics service platform as well as to the processing and analysis of the data. In some cases the data may need to be aggregated with the data of other customers in order to provide better insights and a more holistic view of particular cyber threat campaigns, e.g. new malware targeting a specific model of smart thermostats.

Data owners may choose to anonymise parts of their data in order to address potential privacy concerns that may arise from sharing the data with third parties, such as their service providers or other customers. Data sharing policies can be used to express a data owner's wish on which of the information or data attributes to share in anonymised form only. Table 1 shows an example where a data owner is willing to share the IP camera network traffic logs but with the restrictions that only the destination IP and destination port (i.e. outbound connections) will be provided in plaintext. Other attributes such as source IP and source MAC address should only be shared in anonymised form. In case of their PC network traffic logs, the (outbound) destination IP and URL need to be anonymised while the source IP and information about the outgoing and incoming packet bytes can be shared in plaintext.

However, the more data is anonymised the less useful this data becomes when using it to perform analysis functions.

Accordingly, a method of facilitating the process to reduce the privacy risk (i.e. re-identification risk) by applying suitable privacy models on anonymised datasets is desirable whilst preserving acceptable level of data utility when anonymising this data.

SUMMARY OF INVENTION

The invention is defined in the independent claims. Optional features are set out in the dependent claims.

According to a first aspect a computer-implemented method is provided for performing privacy controlled data analytics.

The method is performed by a computer system configured to provide incoming anonymized data to a plurality of different analysis functions for analyzing the data, each analysis function having its own set of requirements for data attributes that need to be available in the incoming data, the incoming data originating from a plurality of data sources and being anonymized by applying one or more of a plurality of predetermined anonymization protocols.

The method comprises: determining one or more attributes present in the incoming data that will be processed by the computer system; determining the analysis functions that are capable of being implemented based on the determined one or more attributes of the incoming data and the data attribute requirements for the analysis functions; determining the data attributes of the incoming data that can be anonymised whilst preserving data utility based on the requirements of the analysis functions; determining, for each of a plurality of privacy settings, a privacy score and a data utility score, each privacy setting comprising a unique combination of analysis function, anonymization protocol applied to the data, anonymization protocol parameter value and data attribute; receiving input selecting a desired privacy setting; and processing an anonymized set of data, anonymized according to an identified anonymization protocol, according to the analysis function associated with the selected privacy setting.

The analysis performed using the processed results may be cyber security analysis for detecting and mitigating against potential cyber-attacks.

Embodiments provide a method to implement a Privacy-controlled Analytics Service that allows users/customers benefit from their provider's data analytics capability while at the same time remain in control of their privacy preferences. The corresponding service platform would typically collect the data originating from user's premises, e.g. a user's home network environment, and perform analytics functions on the data in compliance with the user's privacy policy, e.g. which may specify that one or more data attributes should be anonymised. Examples of user data are network traffic and system logs of PCs, routers, smart TVs, set top boxes, IoT devices, etc. The analytics functions can range from basic system and network health monitoring or parental control, to advanced cyber services such as anomaly detection or intrusion prevention. The type of analytics service will depend on each user's choice of privacy protection level. In general the higher the privacy level, the lower the number of analytics functions, or the less accurate the analytics results. This is due to the fact that increasing the privacy level may likely have negative impact on the quality of the data or analytics utility. Each analytics function relies on a certain level of data utility in order to achieve results with acceptable accuracy level. When users starts relaxing their privacy level preference, more and more analytics functions may become available to use.

Embodiments may provide one or more of the following benefits: helping service providers to offer analytics services that can be customised to user data and privacy preferences; support users in making informed decision on giving consent to data processing; and provide consistent privacy and confidentiality level across multiple sets of data and analytics services.

The privacy risk, or desired privacy setting, can be selected by the user. For example, a privacy score may be presented in the form of a graphical interface, such as a curve, for the user, which allows them to select the level of privacy they want to apply, and/or which data attributes they want to share to give them an overall risk score for their privacy. Machine learning may be used to understand the set of (security) analysis functions that need to be applied to the customer data, and the methods described herein may then be used to build a tailored interface (e.g. a curve) that can be offered to the customer to select which risk score they wish to accept based on privacy level, wherein each customer will have a different curve for the risk scoring system based on the analysis functions to be applied.

According to a second aspect there is provided a computer system configured to carry out the method of the first aspect.

According to a third aspect, a non-transitory computer readable medium having stored thereon a computer program that, when run on a system according to the second, causes the system to perform methods according to the first aspect.

BRIEF DESCRIPTION OF THE DRAWINGS

The disclosure will be further described, by way of example only, with reference to the accompanying drawings, in which:

Figure 1 illustrates an example privacy policy for security logs;
Figure 2 illustrates anonymisation of patient data using masking and generalisation techniques;
Figure 3 illustrates an overview of existing privacy models;
Figure 4 illustrates the relationship between privacy level and data utility;

Figure 5 illustrates a platform for privacy-controlled analytics services;
Figure 6 illustrates a method for implementing a learning phase;
Figure 7 illustrates a method for construction of a new structured version of input data which uses common syntax;
Figure 8 illustrates an example analytics function selection process based on the data available from example data sources;
Figure 9 illustrates a method for the selection of anonymisable attributes of user data;
Figure 10 illustrates the process of calculating privacy scores for each possible privacy setting in the case of sample datasets originating from different sources/devices that can later be used for various analytics functions;
Figure 11 illustrates the process calculating the data utility score for each possible privacy setting in conjunction with each analytics function;
Figure 12 illustrates an example Customised Privacy Knowledge Base table formed by combining the results of Figure 10 and Figure 11;
Figure 13 shows a diagram that visualises the inverse relationship between privacy and utility based on the customised PKB entries for a particular user providing a set of data sources;
Figure 14 illustrates a selection of analytics functions based on privacy level and data utility thresholds;
Figure 15 illustrates a populated Privacy Knowledge Base table;
Figure 16 illustrates a populated Privacy Knowledge Base table having different privacy algorithms applied to different attributes of the data;
Figure 17 illustrates an example method for populating the Privacy Knowledge Base;
Figure 18 illustrates an example of available privacy settings for an analytics function;
Figure 19 illustrates an example method for calculating a privacy score for a given analytics function;
Figure 20 illustrates a Privacy Knowledge Base table populated with privacy scores;
Figure 21 illustrates an example method for calculating data utility scores for the Privacy Knowledge Base;
Figure 22 illustrates an example of a Privacy Knowledge Base before and after consolidation;
Figure 23 illustrates an exemplary Restricted Boltzmann Machine (RBM), according to an embodiment;
Figure 24 illustrates an exemplary training sample for an IDS security log, according to an embodiment;
Figure 25 illustrates an exemplary RBM with visible units observed for three types of security logs, according to an embodiment;
Figure 26 illustrates an exemplary reconstruction of input parameters to provide data policy recommendations, according to an embodiment; and
Figure 27 illustrates a flow diagram of exemplary steps for training a RBM and provide policy directives recommendations, according to an embodiment.

DETAILED DESCRIPTION OF THE INVENTION

Embodiments and related technology helpful for understanding and implementing the embodiments will now be described with reference to the Figures. The same or similar reference numerals are used to refer to the same or similar components across different Figures.

Generally embodiments may provide a method to implement a Privacy-controlled Analytics Service that allows internet users to benefit from their provider's data analytics capability while at the same time remaining in control of their privacy preferences. The service is customised to each user in terms of available data sources and privacy preferences by implementing the following steps within a learning phase: learn about the type, format and structure of the data; determine available analytics functions; select data attributes for anonymisation; and construct/update a customised Privacy Knowledge Base. A mechanism is also provided to allow a user to select how much data they can share in relation to the privacy protection that allows the customer to indicate what data they would like to share. Currently users/customers want to share their security events and incidents to security analysts and/or security analysis functions but they do not know the implications of sharing specific sets of data and the risk score of revealing their identity. Embodiments may solve this issue by providing a privacy-controlled analytics service that uses a graphical interface in the form of a privacy curve approach that shows the user the risk score of sharing specific data to their privacy, before sharing the data with the third party security analyst or security functions.

One thing that each data owner needs to consider when anonymising their data is to ensure that the resulting sanitised or anonymised datasets can still be used for further processing and analytics, particularly given that this is the main purpose of sharing the data in the first place. This means that the data utility, or analytics utility, needs to be maintained at an acceptable level while at the same time providing the highest possible privacy protection. In general one of the following anonymisation or transformation techniques can be used to hide sensitive information:

Masking: replaces sensitive information with random characters or data while retaining the original data format. For example, the IP address '132.123.112.58' could be transformed to '132.123.YYY.ZZZ' in order to prevent unique identification of the host machine.

Suppression: removes selected information to protect the privacy of the entities (e.g. individuals, organisations, etc.). Suppression is normally applied to directly identifying information. For example, a user's full name or username attribute is removed completely from the data records.

Generalisation: is a technique to remove specificity from the data. For example, the port number '80' is generalised to '[50,100[', the attack type 'Ping of Death' is generalised to 'DoS (Denial of Service)'.

Tokenisation: is a technique to substitute a sensitive data element with a nonsensitive equivalent, referred to as a token that has no extrinsic or exploitable meaning or value. The underlying tokenisation system allows mapping the tokens back to the sensitive (original) data and should therefore be adequately protected. For example, the username 'james.smith11' could be tokenised to 'USER-002'.

When using one of the anonymisation techniques listed above the data owner or analyst needs to make sure that the related analysis function (also known as an analytics function) is capable of dealing with the transformed format. For example, the function is able to deal with alphabets as part of an IP address rather than digits only. If that is not the case, replacing the sensitive part of the IP address with random digits instead would be a better choice, e.g. a method called Format-Preserving Encryption could be used to achieve that.

The main goal of such anonymisation techniques is to hide or blur the original value of identifying or sensitive data attributes. However applying such techniques alone may not be enough to protect the privacy of involved entities. Depending on the data and any external or side knowledge about the entity a number of targeted attacks could succeed in reidentifying the entities or deriving sensitive information from anonymised or transformed data. Examples of attacks on anonymisation-based systems include:

- Homogeneity attack
- Background knowledge attack
- Minimality attack
- Unsorted matching attack
- Complementary release attack
- Temporal attack

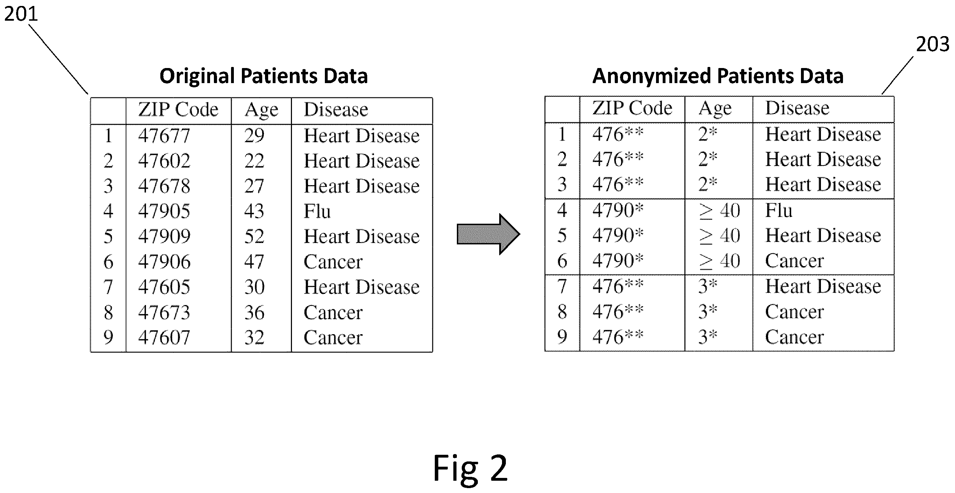

Figure 2 shows an example of anonymisation of healthcare patient data. The left table 201 shows the data in its original format while the right table 203 shows its anonymised version after applying masking and generalisation techniques on the ZIP code and age information. A homogeneity and background knowledge attack can be done as follows:

Alice knows that Bob is a 27-year old man living in area with ZIP code 47678. Alice also knows that Bob's records are in the table. From the anonymised data table 203 Alice can conclude that Bob corresponds to one of the first three records, and thus must have heart disease. The attack shows that a disclosure of sensitive information about Bob (i.e. he has heart disease) is possible even if the data is anonymised.

Therefore the use of anonymisation techniques should normally be coupled with suitable privacy models and algorithms in order to prevent the disclosure of one's identity and sensitive information. A number of privacy models have been developed to address this issue. A privacy model (or its associated algorithm) normally provides protection against a specific type of disclosure:

Identity disclosure: the identity of the individuals or entities would directly or indirectly be revealed from the data.

Attribute disclosure: sensitive information about the individuals or entities would be revealed from the data.

Membership disclosure: the inclusion (or exclusion) of the individual's or entity's records in the data would be revealed.

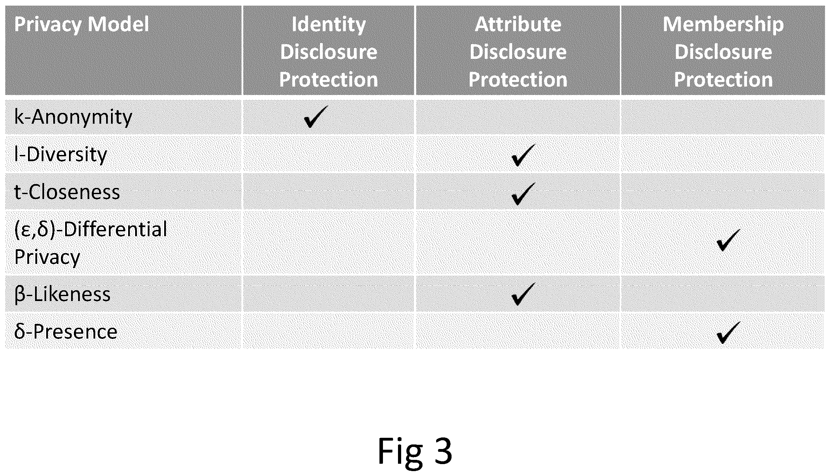

Figure 3 provides an overview of existing privacy models such as k-Anonymity, 1-Diversity or Differential Privacy, along with the type of disclosure protection each model provides. In order to provide effective privacy protection it is therefore necessary to apply a privacy model on the correct type of information (i.e. data attribute or field). In general each data field or attribute of a dataset (e.g. security log) can be categorised as follows:

Insensitive: no special protection or anonymisation is needed.

Identifying: its disclosure directly reveals the individual's or entity's identity, e.g. full name, username, company name, etc.

Quasi-identifying: its disclosure may indirectly reveal the individual's or entity's identity especially if it is combined with other attributes or external background knowledge. Examples of quasi-identifying attributes include IP address, hostname, laptop ID/barcode, etc.

Sensitive: its disclosure reveals sensitive information about the individual or entity, e.g. operating system, software patch version, etc.

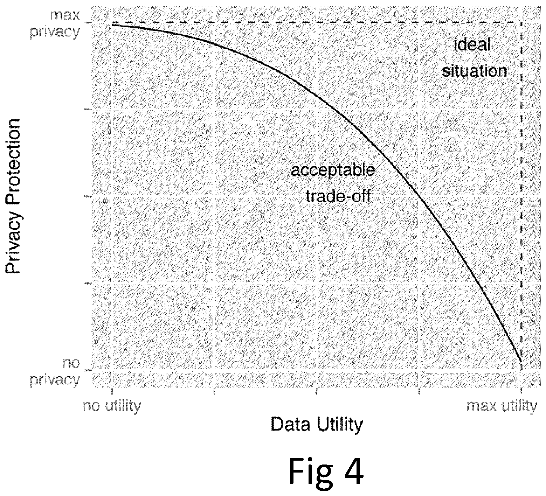

As mentioned above, data owners need to maintain acceptable level of data utility when anonymising their data. This is due to the existing inverse correlation between privacy and data utility (usefulness of data) as shown in Figure 4. In particular, if any privacy model needs to be applied on the data to protect it against targeted privacy attacks, too much protection may lead to poor data utility which eventually makes the data less useful for analytics. The ability to adjust the privacy/utility trade-off would benefit the data owners, service providers, analysts and other stakeholders substantially.

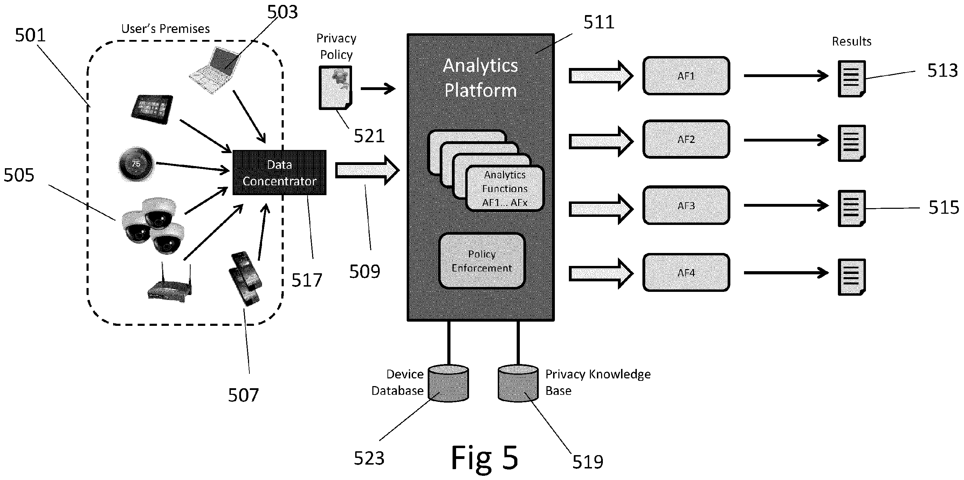

Figure 5 is an example embodiment of a computer implemented Privacy-controlled Analytics Service that allows users/customers benefit from their provider's data analytics capability while at the same time remain in control of their privacy preferences. The corresponding service platform would typically collect the data originating from user's premises, e.g. the user's home network environment, and perform analytics functions on the data in compliance with the user's privacy policy. Such a privacy policy may require, for example, that certain data attributes (i.e. data fields) should be anonymised. Examples of user data are network traffic and system logs of PCs, routers, smart TVs, set top boxes, IoT devices, etc. The analytics functions can range from basic system and network health monitoring or parental control, to advanced cyber services such as anomaly detection or intrusion prevention. The type of analytics service will eventually depend on each user's choice of privacy protection level. In general the higher the privacy level, the lower the number of analytics functions (also known as analysis functions) can be provided, or the less accurate the analytics results. This is due to the fact that increasing the privacy level may likely have negative impact on the quality of the data or analytics utility. Each analytics function relies on a certain level of data utility in order to achieve results with acceptable accuracy level. When users starts relaxing their privacy level preference, more and more analytics functions may become available to use.

As shown in Figure 5, a set of data sources 503, 505, 507, in the form of devices such as PCs, tablets, smart devices, mobile phones, routers, etc. are operating in a user's network 501 (such as their local home network). These devices provide incoming data 509 that is input to an analytics platform 511 wherein a plurality of analytics functions AF1, AF2, AF3, AF4... AFx are available to process the incoming data set. A respective analysis result 513, 515 may be produced through an analysis task AF1, AF3. As such, a set of results may be produced through different analysis tasks by consuming the incoming data 509. For each analysis task, one or more analytics functions AF1, AF2, AF3 ... AFx may be used in series for producing a specific analysis result. An analytics function may either be a simple aggregation function such as a grouping or average function, or more advanced such as clustering or anomaly detection.

The data sources 503, 505, 507 may consist of different data types. In some embodiments, the data types for cyber security analysis are referred to as security logs. The data types may also be malware or anti-virus alert data, geo-location of each security event or affected assets, etc. Each data type may include a plurality of data attributes to be processed at each analysis task.

As shown in Figure 5 the different data sources (i.e. devices) forward their data/logs via a local data concentrator 517 to the analytics platform 511. The analytics platform may be implemented on one or more computers, such as one or more servers, and may be deployed in the cloud. The data concentrator 517 function may be performed by a suitably configured router device or similar. In particular, a smart wireless router could be used, such as a broadband hub (e.g. a BT broadband hub). Software installed within the router would be able to perform the task since the router normally has visibility of all the traffic going in to/out of the user's home network.

A data privacy policy 521 is assigned to the incoming data set 509 uploaded to the analytics platform 511 in order to control how each data attribute (i.e. a data field) should be presented (i.e. in plain text or anonymised form) before they are shared and used by the analysts. Each analytics function would have its own set of requirements with regard to the input data attributes and formats in order to allow the function to work correctly and produce the expected results. Hence it may be important that the data policy 521 and its specified obligations are "aligned" with the analytics functions requirements, as otherwise the data could not be used by the analytics function. Creating such data policies 521 is normally a manual process, which often present difficulties to data policy creators as a variety of analytics functions and their corresponding results would need to be taken into account during the process in order to find the right balance between privacy and data utility.

The various datasets from the data sources may later be aggregated and correlated by the relevant analytics functions in order to produce specific analysis result. Such data aggregation would likely increase the risk of re-identification or disclosure of sensitive information as more information is exposed and could be linked together to derive or infer new knowledge (that could be of sensitive nature), even if the corresponding attributes have already been anonymised. It is therefore important to apply suitable privacy models and algorithms on the anonymised data in order to minimise the risk while maintaining acceptable level of data utility. This can be achieved with the help of a Privacy Knowledge Base 519. The method for creating such a Privacy Knowledge Base is described below.

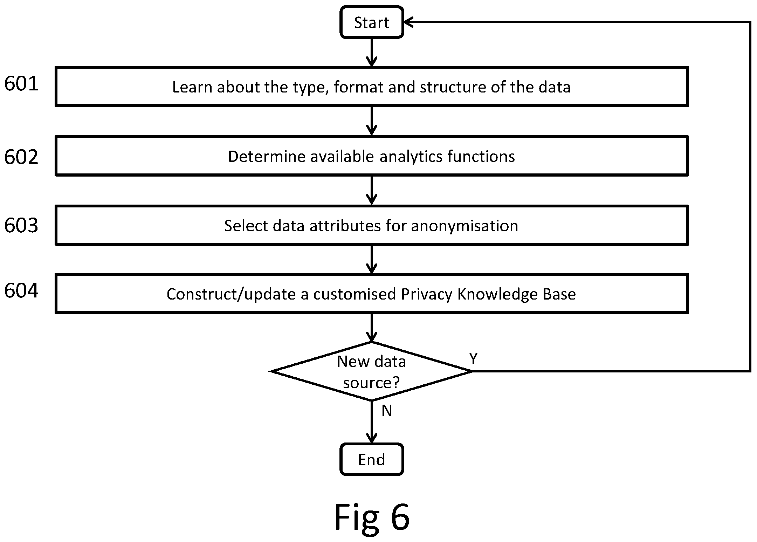

Since the number and types of data sources (i.e. devices) are different for each individual user (or household/business), and so are their privacy preferences, the analytics platform needs to go through a learning phase first before it can process live user data. The steps for implementing such learning phase are shown in Figure 6.

At step 601 learning is performed about the type, format and structure of the data that will be ingested by the analytics platform. The platform needs to learn what information will be available across all connected data sources (of a particular user or particular user network), e.g. IP camera traffic logs, PC network traffic, smart TV logs, etc.

At step 602 the analytics functions (i.e. service capabilities) are determined that can be offered to the user based on available data sources.

At step 603 the information or data attributes that can be anonymised in combination with relevant analytics functions are selected.

At step 604 a customised privacy knowledge base is constructed or updated that will help facilitate the enforcement of the user's preferred privacy policies while processing the data.

The learning phase needs to be repeated if a new data source has been added (or an existing one removed).

Each step of the learning phase is described in more detail below.

Regarding step 601, data sources can be of different types, e.g. PCs, IoT devices, routers, smart TVs, etc. and would thus generate data in different formats and structures. In some cases the data may also be unstructured (e.g. emails) or semi-structured (e.g. system logs). In order to allow the analytics platform to identify any sensitive attributes or information, the data needs to be structured and its semantics need to be understood, e.g. which data attribute or field represents the source IP. This can be a time-consuming and cumbersome task if no pre-knowledge about the device exists.

Embodiments assume that such pre-knowledge does exist in the form of a Device Database 523. The database contains information about devices and may, for example, contain information about most devices available in the market such as IP camera, smart TVs, smart meters, etc. that a user may choose as their data sources. The database 523 assists the analytics platform to extract information from the data sent by a device of known type and model. It can be used to map the data attributes in a consistent way.

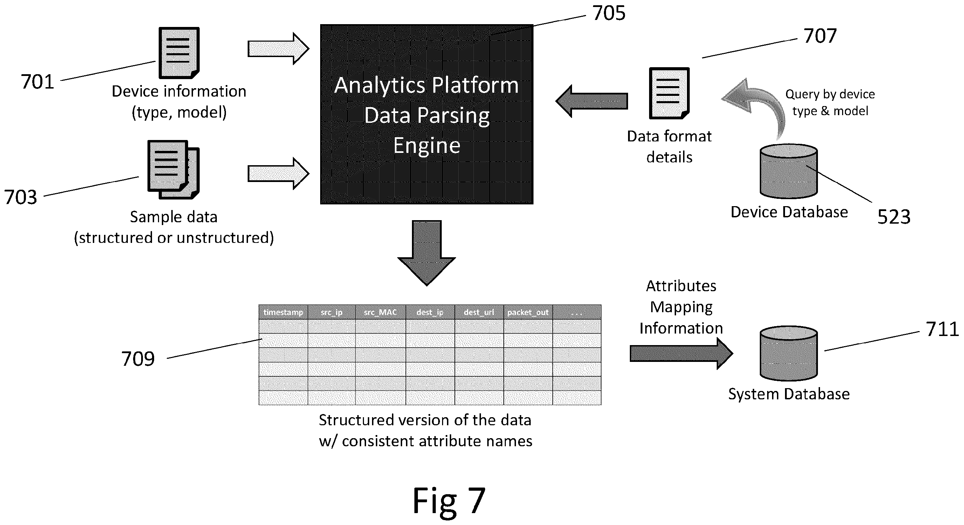

Figure 7 shows an example of how a consistent mapping of the data attributes can be achieved for multiple devices.

The user registers the device and provides information 701 about its type and model, e.g. by selecting them using a user interface provided by the analytics platform. In some cases this information can be automatically detected by the analytic platform based on the device's sample data 703.

The analytics platform 511, and more specifically a data parsing engine 705 operated by or in conjunction with the analytics platform, queries its device database 523 to retrieve the data format details 707 for the chosen device.

The device sends sample data 703 to the analytics platform. This process may optionally be mediated by the local data concentrator 517.

Using the information retrieved from device database 523 the analytics platform 511 parses and extracts the attributes and properties from the data and creates a new structured version of the data 709. This may be performed irrespective of whether the received sample data was structured or not. A software module (e.g. a plugin) for extracting information from the particular device type may have already been integrated into the platform's parsing engine 705.

The parsing data logic may be implemented elsewhere other than within the analytics platform. For example, as an alternative, the parsing engine logic may be implemented in the data concentrator that is deployed at the user's premises. The concentrator would then communicate with the analytics platform 511 to retrieve the data format details from its device database 523. The resulting structured data 709 will use the same syntax for data attributes across different types of device. For example, a destination IP attribute will always be called "dest_ip" irrespective of type of the device.

The analytics platform 511 stores the attributes mapping information for that particular user's device in its system database 711. This information can later be used to directly transform any data coming from that particular user device (e.g. uniquely identified by its serial number or MAC address) into its structured version which uses a common syntax.

The new structured version of the data is now ready for further processing within the platform, e.g. to be aggregated with the data of other devices and used together as input data for the various analytics functions.

Regarding step 602 it is assumed that a number of Analytics Functions (AF) (also known as analysis functions) are already implemented by, and/or integrated in, the analytics platform. Examples of such analytics functions have already been given but further include network health monitoring, traffic anomaly detection, detection of suspicious inbound/outbound traffic, etc. The analytics functions, as with any embodiment herein, may be security functions implemented for security analysis purposes. Each analytics function has input data requirements that need to be satisfied in order to function correctly and produce the expected results. An analytics function may or may not be device-agnostic, e.g. it may be specially designed to analyse aggregated data from WiFi-routers and IP cameras.

Once all the user devices have been registered with the analytics platform and the associated sample datasets provided, the analytics platform will have an overview over what information it can expect to receive and aggregate from all the devices. The availability or presence of specific types of devices and the associated data or attributes, e.g. source IP, source port, etc. will determine the types of analytics functions or services that can be offered to the user.

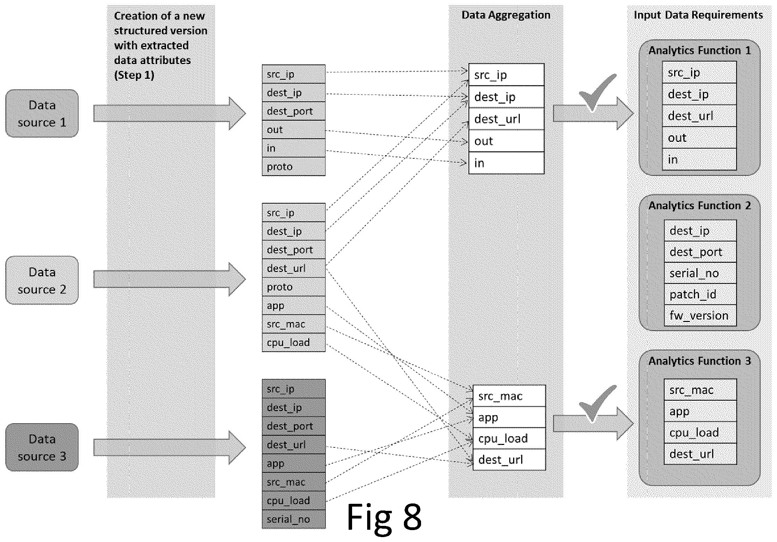

Figure 8 illustrates the analytics functions selection process based on the data available from three example data sources. The extracted information from Data source 1 and 2 are aggregated to match the input data requirements of the Analytics Function 1. Both Data source 2 and 3 can also provide input data for Analytics Function 3. However Analytics Function 2 cannot be offered because none of the available data sources can provide "patch_id" and "fw_version" information. After completing this step the analytics platform has determined a subset of its available analytics functions that can be performed on the currently available user data.

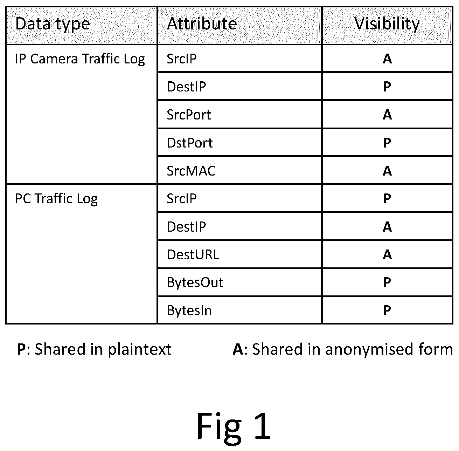

Regarding step 603, in order to facilitate the enforcement of the user's privacy policies 521 when performing the analytics on user data, all the data attributes that are deemed sensitive are identified first. The intention is to remove or anonymise such sensitive attributes using suitable privacy-preserving algorithms. However, as already mentioned in relation to step 602, each analytics function has its own set of requirements in terms of the data attributes that need to be present/available in the data in order to function correctly or at the right level of accuracy. Some of the data (i.e. some of the data attributes or fields) may be required as plaintext while some others could be anonymised. It is therefore important to perform the selection of anonymised attributes (cf. Figure 1) in alignment with the requirements and capabilities of each analytics function.

Below there is a method titled "Privacy Policy Recommendation" (PPR), which describes a method to provide recommendation of effective privacy policies for protecting sensitive information against unconsented disclosure. That PPR method can be applied here to select the user data attributes that can be anonymised for a given analytics function. Since most of the analytics functions may have already been integrated in the analytics platform for quite some time, most of the process related to the PPR method can already be completed in the past. The analytics platform provider would have executed the process to determine anonymisable attributes for each analytics function using suitable sample (historical) data during the integration (i.e. induction) phase of the analytics function. Hence it can be assumed that each analytics function already has a pre-defined list of input data attributes that can be anonymised.

Each data attribute can also be tagged as Identifying, Quasi-identifying, Sensitive or Insensitive attribute based on pre-knowledge about the data source/device, i.e. its data sensitivity classification. Such sensitivity classification is usually generic for common attributes, e.g. source and destination IP address are usually tagged as quasi-identifying attributes. The users may be given the option to manually change the sensitivity classification of each attribute, if necessary.

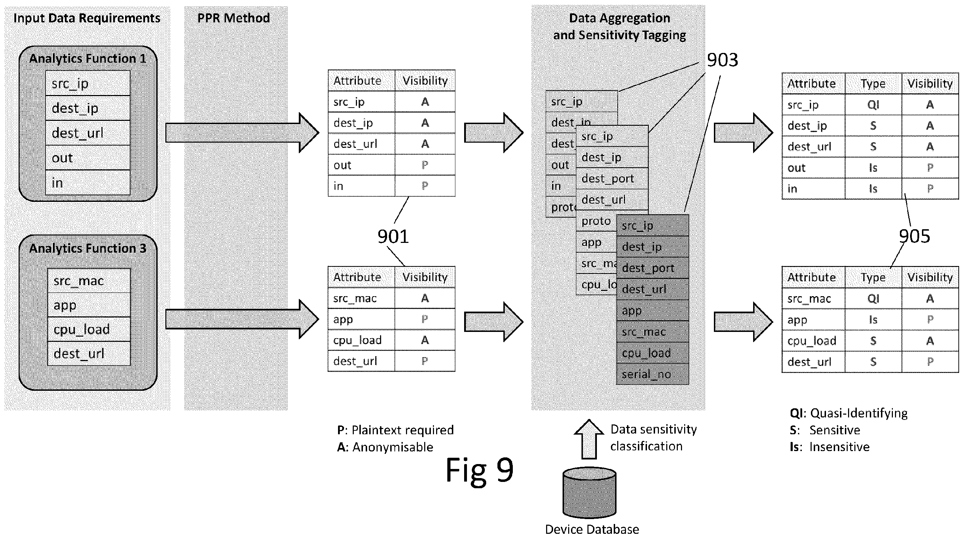

As illustrated in Figure 9, in this particular learning phase the analytics platform will compare the predefined lists 901 of anonymisable attributes with the available user data (from different sources) 903, as illustrated in Figure 9.

At the end of the process there may be different sets 905 of anonymisable attributes (made up of data from different sources) that will be part of the input data for each analytics function. This is possible because a data attribute that can be anonymised for an analytics function may have to be presented in plaintext to another analytics function. In the example given in Figure 9 this applies to "dest_url" attribute. This does not necessarily mean that the privacy level will be lower as result of providing this attribute in plaintext because anonymising a data attribute is only one of the factors that can influence the privacy risk. Other factors include the combination or aggregation of specific attributes, existing background knowledge, data homogeneity, etc. Nevertheless the balance between privacy level and data/analytics utility should be taken into account when anonymising relevant data attributes. The fourth step of the learning phase aims to address this issue.

Regarding step 604, although the analytics platform already knows which set of attributes of the user data can be anonymised when executing the corresponding analytics functions, it still does not have enough information about the anonymisation and privacy algorithms (e.g. k-Anonymity, 1-Diversity, etc.) that should be applied on the data in order to honour the user's privacy preferences. On the other hand the user may also not have the required technical knowledge and expertise to decide on which anonymisation techniques and algorithms to use. The tuning of parameters used in each privacy/anonymisation algorithm has direct impact on the privacy protection level and data/analytics utility. Setting the privacy level too high may make the anonymised data less useful for the consuming analytics functions as its results may be much less accurate. Embodiments may therefore optionally make use of a Privacy Knowledge Base, which is described below, in order to deal with this issue.

The main goal of a Privacy Knowledge Base (PKB) is to simplify the process of choosing suitable privacy algorithms that can provide enough privacy protection while at the same time do not reduce the data utility to the extent that the data becomes less useful or irrelevant. Such PKB can be constructed after it has undergone several iterations with representative sample datasets for each analytics function. Note that each analytics function may require different sets of data (i.e. different attributes) as its input. The PKB (i.e. its contents/entries) is highly dependent on the statistical properties of the datasets and the analytics functions it is representing. This means that PKB entries for particular user data cannot be pre-computed using generic datasets or data of other users or sources, i.e. the PKB entries should be customised to each user data.

In order to populate the PKB a process called "Privacy Models Assessment" (PMA) procedure may be carried out. Optionally this procedure comprises two steps:

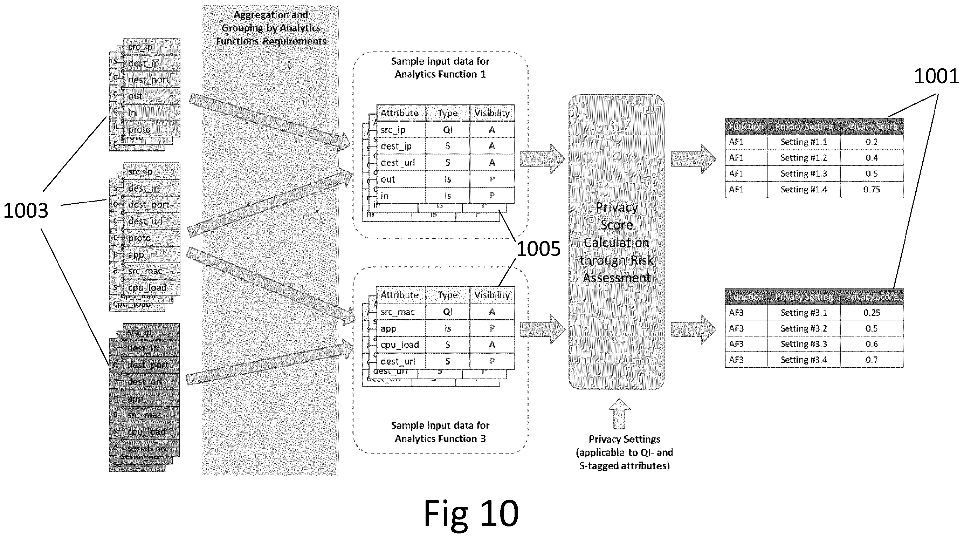

Figure 10 illustrates the process of the first step in the case of sample datasets originating from three sources/devices that can later be used for two analytics functions.

In the first step the privacy score (i.e. privacy level) 1001 is calculated for each possible privacy setting. Representative sample user datasets 1003 are provided to complete this step. The sample datasets 1003, that have been obtained and prepared from different user data sources, are first grouped according to the input data requirements for each analytics function to produce processed sample input data 1005. After applying each privacy setting to the corresponding anonymisable attributes (which are either quasi-identifying or sensitive) the re-identification risk and thus the privacy score can be computed.

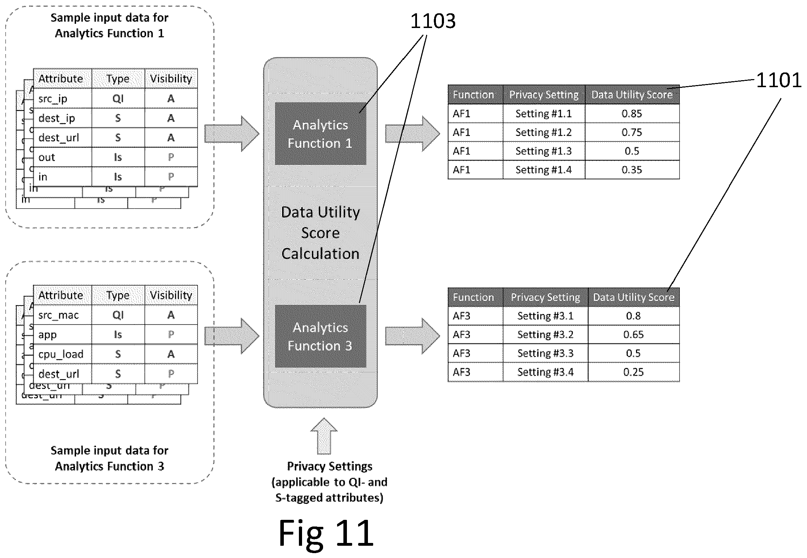

Figure 11 illustrates the process of the second step, in which the data utility score 1101 is calculated for each possible privacy setting in conjunction with each analytics function 1103. Each privacy setting is applied to the sample datasets that are relevant for each analytics function and the anonymised datasets are inputted to the analytics function and undergo multiple iterations until an average relative error, and thus the data utility score, can be determined as shown in Figure 11.

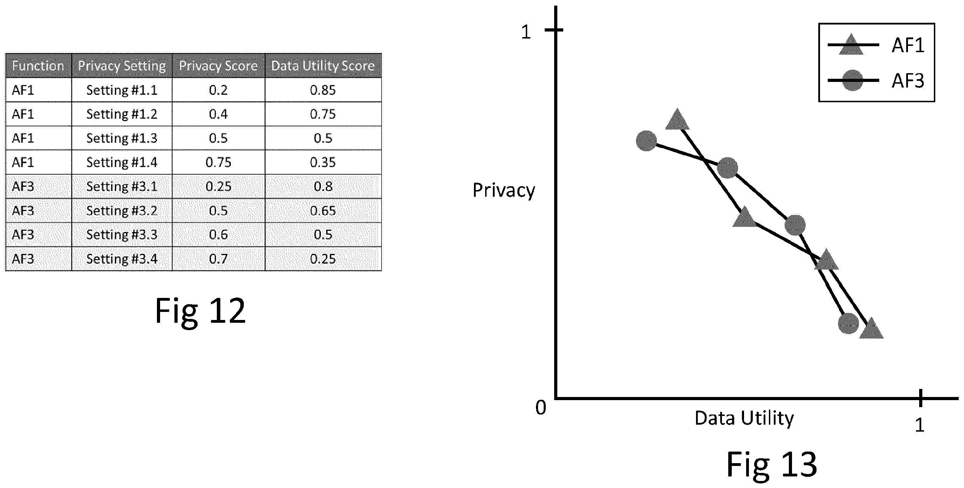

The utility score results of the second step are combined with the privacy scores obtained from the first step. The PKB entries for each combination of analytics function and privacy setting are therefore completed, resulting in a table of the sort shown in Figure 12.

Figure 13 shows a diagram that visualises the inverse relationship between privacy and utility based on the customised PKB entries for a particular user providing a set of data sources.

After completing the learning phase the analytics platform is ready to process live user data according to the obtained knowledge, i.e. available types of data, available analytics functions, anonymisable data attributes, and customised PKB entries (for each user). This phase may be referred to as the post learning phase, or operational phase. The analytics platform now only needs to capture the user's privacy preferences in a way that it can then enforce the required privacy measures (i.e. data anonymisation) on the input data for a given analytics function. The user may optionally need to have some guidance on which privacy level they need to choose in order to get the analytics service or functions they want.

One way to facilitate this selection process is to introduce a Data Utility Score Threshold 1301 for each analytics function AF1, AF2, etc., listed in the PKB. For example, the threshold may represent the minimum data utility score that is needed for an analytics function in order to start producing analytics result at acceptable quality. A data utility score higher than the threshold may improve the accuracy or details of the result.

For example, assuming a security analytics function that can detect inbound malicious traffic; a data utility score just above the threshold value may allow the function to detect the presence of such inbound malicious traffic along with the corresponding source IP and domain of the traffic. However if the data utility score is 30% higher than the threshold the function may be able to identify the target device or destination of the traffic too.

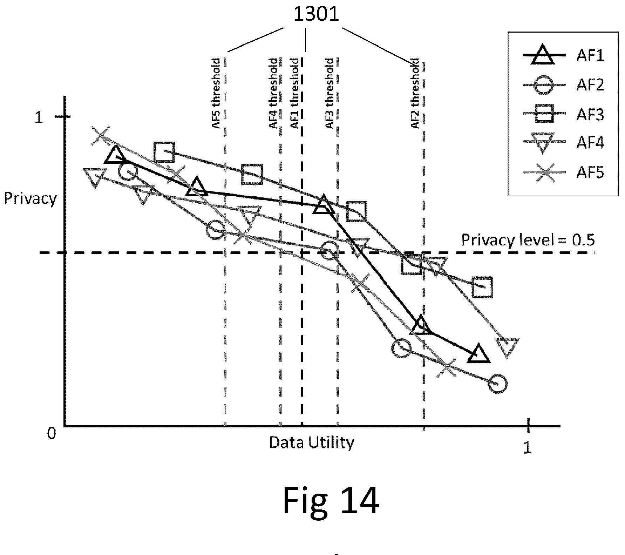

Figure 14 shows an example "Privacy vs. Utility" diagram for five analytics functions where each analytics function has its own data utility threshold set. The user may be able to provide input to set the privacy level. As the user adjusts their preferred privacy level the number and types of available analytics functions will change accordingly. For example, with privacy level/score set to 0.5 the analytics functions AF1, AF3, AF4 and AF5 are available. However if the privacy level were raised to 0.6 then the analytics functions AF4 and AF5 will be removed from the list.

An example method for creating a Privacy Knowledge Base will now be described.

In general the method may be performed by the analytics platform 511 or other suitable computer. For example, the method may be performed by a computer system configured to provide anonymized data to a plurality of different analysis functions for analyzing the data, the data being anonymized by applying one or more of a plurality of predetermined anonymization protocols, each protocol having an anonymization protocol parameter that can be specified in order to determine the degree of anonymization applied to the data.

In general the method comprises determining, for each analysis function: privacy settings, each comprising a unique combination of anonymization protocol applied to the data, anonymization protocol parameter value and data attribute; a privacy score for each of the determined unique combinations of anonymization protocol applied to the data, anonymization protocol parameter value and data attribute; and a data utility score for each of the determined unique combinations of anonymization protocol applied to the data, anonymization protocol parameter value and data attribute.

The method further comprises processing the results, for each analysis function, by: ranking the unique combinations of anonymization protocol, anonymization protocol parameter and data attribute based on the privacy score and/or data utility score; and storing the ranked results for subsequent selection and use by the computer system to process an anonymized set of data, anonymized according to an identified anonymization protocol, according to the analysis function.

Embodiments may therefore automate the population of a Privacy Knowledge Base to allow an analytics system to provide optimal privacy settings based on user requirements.

Data utility is a term describing the value of a given data release or set as an analytical resource. This comprises the data's analytical completeness and its analytical validity. Disclosure control methods usually have an adverse effect on data utility. Ideally, the goal of any disclosure control regime should be to maximise data utility whilst minimizing disclosure risk. In practice disclosure control decisions are a trade-off between utility and disclosure risk.

It is very difficult for data owners to strike the right balance between privacy and data utility (i.e. fine-tuning the algorithm parameters) without any further guidance and deep knowledge of the privacy/anonymisation algorithms. By determining privacy and data utility scores for each function and for each combination of anonymization protocol, anonymization protocol parameter value and data attribute it is possible to build a risk score of privacy vs. data utility for each security/analytics function a user may want to apply to analyse specified data. This provides a score of risk of exposing privacy of the user based on the security/analytics function requirements and properties. The impact on data utility will depend on many factors such as selected anonymization protocols (also known as privacy algorithms), the algorithm/protocol parameters, type and characteristics/statistical properties of the typical dataset e.g. regarding its sparsity, uniqueness, all in combination with each analytics function that will consume the dataset. Determining the privacy and quality of the data after applying anonymization in relation with the combinations of selected anonymization algorithms, algorithm parameters and analytics functions allows these impacts to be taken into account. For the same set of privacy algorithms and parameters, depending on the associated analytics function, the method will produce different privacy risk and data utility scores. This is important to allow users get the most (i.e. the highest data utility) out of the data while still preserving a certain level of privacy.

Various optional features of the method of creating a Privacy Knowledge Base may include:

1. Determining a privacy score for each of the determined unique combinations of anonymization protocol applied to the data, anonymization protocol parameter value and data attribute comprises: computing the re-identification risk, R, based on the statistic distribution of the relevant data attribute values within an example dataset and determining the privacy score based on the re-identification risk. The re-identification risk represents the probability of any entity (e.g. individuals, organisations, etc.) in the data being re-identified or their sensitive information being disclosed.

2. The re-identification risk may be computed as the minimum value of $1/f_i$ across all equivalence classes:

$$R = \frac{1}{\min(f_i)}$$

wherein an equivalence class is defined to be a set of data records that have the same values for anonymised quasi-identifiers and wherein $f_i$ is the number of records in an equivalence class.

3. Determining a privacy score for each analysis function may comprise, for each privacy setting: (i) selecting a sample dataset, Di, from a repository {D}, where i=1 to n with n being the total number of sample datasets in the repository; (ii) anonymising the data of each data record using the selected anonymization protocol; (iii) determining, from the anonymised data records, equivalence classes and determining, from the anonymised records, a dataset value, Ri, indicative of privacy score; (iv) repeating steps i to iii for the next sample dataset D_(i=i+1) until i=n; (v) determining an overall value, R, indicative of privacy score over all sample datasets based on the individual dataset values, Ri; (vi) determining a privacy score, P=1-R, based on the overall value R; (vii) storing the privacy score for the selected privacy setting.

4. Determining a data utility score for each analysis function may comprise, for each privacy setting: comparing an analysis result with a reference result that would have been produced by the same analysis function if no privacy setting was applied.

5. Determining a data utility score for each analysis function may comprise: (i) selecting a combination of an analysis function and privacy setting; (ii) selecting a sample dataset Di from a repository {D}, where i=1 to n with n being the total number of sample datasets in the repository; (iii) inputting the selected dataset with original, non-anonymised, values to the analysis function to produce a first result v(off,i); (iv) anonymising the selected dataset by applying the privacy setting; (v) inputting the anonymised dataset to the analytics function to produce a second result v(on,i); (vi) determining a dataset value indicative of the data utility based on the first and second result; (vii) repeating steps ii to vi for the next sample dataset D(i=i+1) until i=n; (viii) determining an overall value, $\eta$, indicative of the data utility score over all sample datasets based on the individual dataset values; (ix) determining a data utility score, U=1-$\eta$, based on the overall value, $\eta$; (x) storing the determined data utility score for the given combination of analysis function and privacy settings; and (xi) repeating steps i to x with a new combination of analysis function and privacy setting until all the data utility scores are populated.

6. Processing the results may further comprise: consolidating the stored results based on an inverse relationship between privacy score and utility score by removing results that do not adhere to the inverse relationship. In particular, consolidating the stored results may comprise: sorting the results obtained for each analysis function according to data utility scores; for each subsequent result with a lower utility score, comparing the corresponding privacy score with the preceding result's privacy score; where the privacy score for the subsequent result is less than or equal to the preceding result's privacy score, and where the utility score for the subsequent result is less than the preceding result's privacy score, removing that subsequent record from the results.

7. Grouping the results according to each analysis function.

8. The anonymised data provided to the analysis functions may originate from a plurality of different data sources.

9. The data provided to the analysis functions may be anonymised according to one or more user defined privacy policies, the privacy policies indicating whether data attributes should be provided in plain text or anonymised form.

10. The predetermined anonymization protocols may include one or more of k-Anonymity, 1-Diversity, t-Closeness, ($\epsilon,\delta$)-Differential Privacy, $\beta$-Likeness and $\delta$-Presence.

11. Receiving an input selecting a ranked result and processing an incoming anonymized set of data according to the associated analysis function, anonymization protocol and anonymization protocol parameter.

According to an embodiment the Privacy Knowledge Base 519, implemented as a database or table, contains the optimal settings and parameters for privacy-preserving anonymisation algorithms to achieve certain levels of data utility. In principle data utility strongly depends on which analytics functions are used to consume the (anonymised) data for producing the results. The privacy algorithm settings thus need to be optimised for each analytics function to achieve the best possible outcome. It is assumed that the anonymisation process will only apply to those data fields or attributes that were categorised as either quasi-identifying or sensitive. Original values of identifying attributes will be completely removed from the data or redacted in order to eliminate any risk of re-identification, while insensitive attributes can remain unchanged (i.e. plain text). In cases where tokenisation or masking (with random alphabets or numbers) techniques are used to anonymise a data attribute, the platform will categorise it as quasi-identifying attribute.

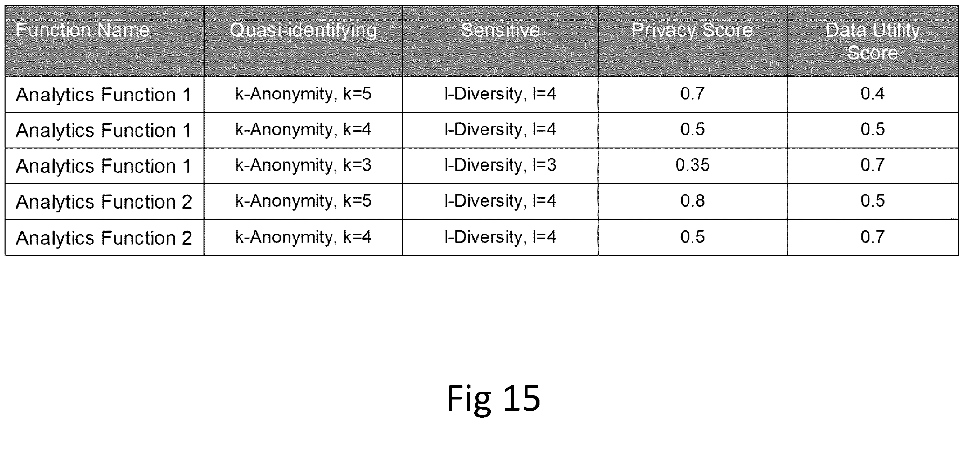

Figure 15 shows an example of a populated Privacy Knowledge Base. As shown, a privacy score P and data utility score U are assigned to each combination of analytics function (AF) and privacy settings for quasi-identifying and sensitive data attributes. In this example, both the privacy score and data utility score are provided on a scale from 0.0 to 1.0, with a higher number indicating better (or higher) privacy/data utility. The procedure for creating or populating the Privacy Knowledge Base is referred as "Privacy Models Assessment" (PMA). The PMA procedure assumes that each privacy model or algorithm can be applied either only to quasi-identifiers or sensitive attributes or to both attribute types, e.g. k-Anonymity for quasi-identifiers and/or sensitive attribute, 1-Diversity for sensitive attributes only. This is due the fact that some algorithms were specially designed to address the weakness of other algorithms in protecting certain type of attributes. For example, 1-Diversity was created to further k-Anonymity in protecting sensitive attributes against homogeneity and background-knowledge attacks.

Each algorithm has specific parameters (e.g. $k$ in k-Anonymity, $l$ in 1-Diversity) to adjust its privacy protection level. In case of k-Anonymity algorithm, a larger k value would normally result in better privacy protection (i.e. higher privacy score) but at the cost of data utility (i.e. lower utility score). For example, in relation to k-Anonymity, the basis for the algorithm is that a database table is anonymous if every search for identifying information results in a group of at least k candidate records. The k value in k-anonymity is thus the privacy parameter which determines the minimum group size. Groups of candidate records form anonymity sets of identifiers in the database table.

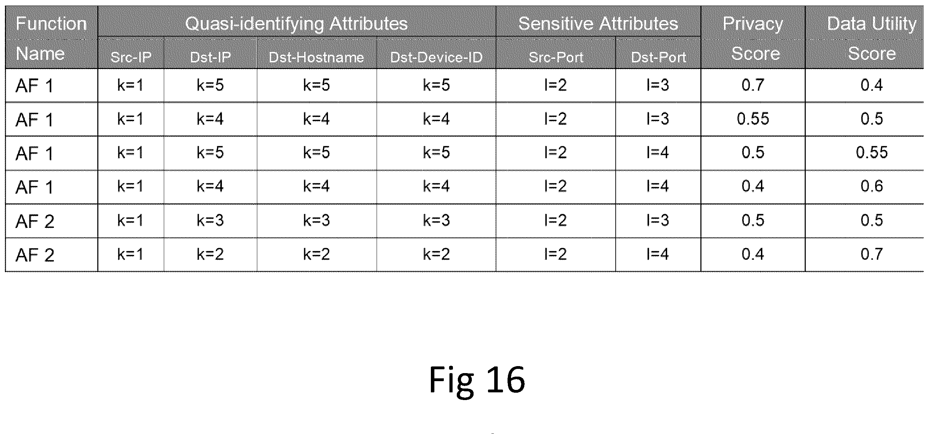

These factors will be taken into account by the PMA procedure when determining the associated privacy and data utility scores. Furthermore each attribute within a dataset may possess different statistical patterns and properties, e.g. much less variations (i.e. unique values) in destination port numbers are expected in comparison to source port numbers found in a Firewall log. Therefore each quasi-identifying or sensitive attribute may also be assigned its own privacy algorithm parameter in order to achieve the expected privacy score, as shown in Figure 16.

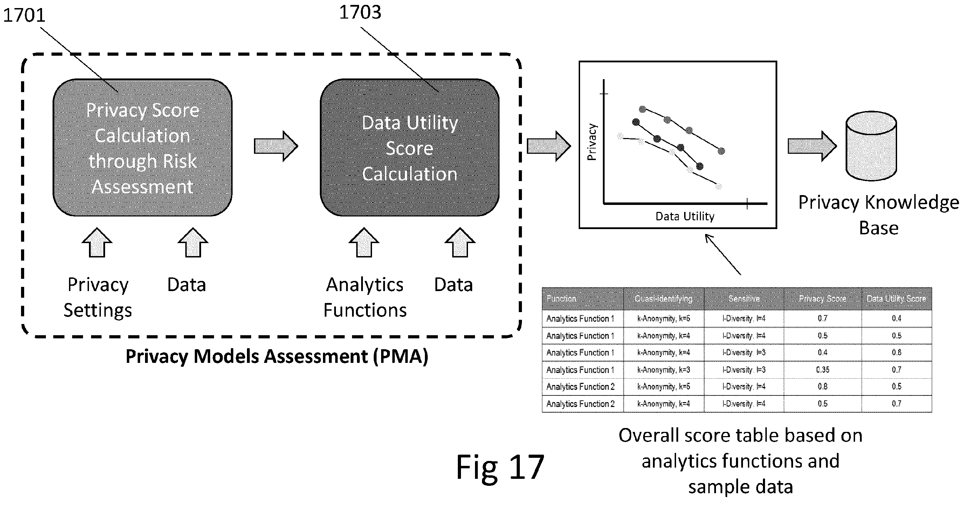

Figure 17 shows the two main steps of the PMA procedure. The PMA procedure may be carried out by the analytics platform 511, or it could be carried out by another computing system.

The first step 1701 deals with the calculation of the privacy score $P$ that can be achieved by the selected privacy settings when being applied together on the quasi-identifying and sensitive attributes. This can be performed, for example, through a risk assessment process where an estimate of so-called re-identification risk $R$ is computed based on the statistic distribution of the relevant attribute values within a typical dataset. The risk represents the probability of any entity (e.g. individuals, organisations, etc.) in the data being re-identified or their sensitive information being disclosed. Enough samples of representative datasets should be provided in order to provide good risk estimates. A higher risk value $R$ means higher disclosure risk and thus less privacy protection. $R$ may range between a minimum and a maximum, for example between 0.0 (full privacy) and 1.0 (no privacy). Once the risk value is estimated, the privacy score P can be directly determined as:

$$P = 1 - R$$

The second step 1703 deals with the calculation of the data utility score $U$ that can be observed by the analytics function when consuming the dataset that has previously been anonymised using to the selected privacy settings. Enough samples of datasets should be provided in order to achieve a representative data utility score that takes the statistical pattern and properties of typical datasets into account.

A Privacy Setting is defined here as a possible combination of one or more privacy models or algorithms (such as k-Anonymity and/or 1-Diversity) along with their specific parameters that can be used to protect a fixed list of quasi-identifying and sensitive attributes, which in turn is specific to each analytics function. As mentioned earlier a single privacy algorithm may also be used for both types of attributes.

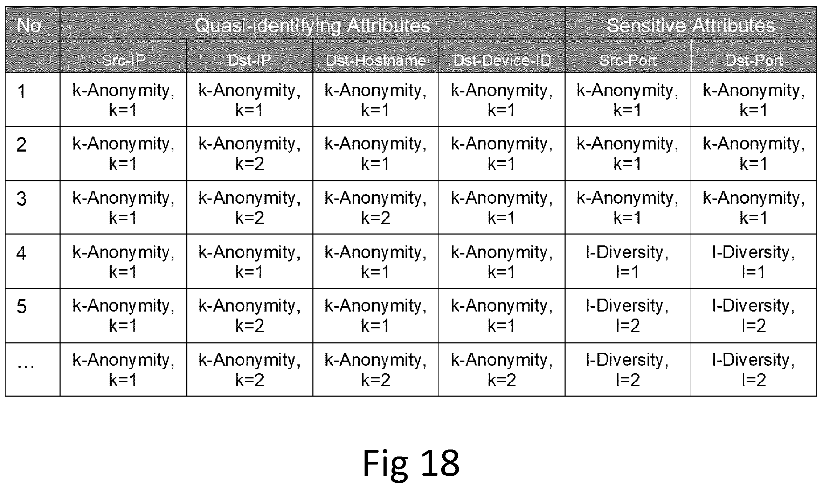

Figure 18 shows an example of available privacy settings for an analytics function. In this example the parameter value (e.g. k value for k-Anonymity) can be changed, such as incremented or decremented, for each attribute in order to create a new privacy setting. It is anticipated that the list of unique privacy settings will get longer as the process is repeated multiple times. The number of possible privacy settings is very large, but at some point adjusting or tweaking the privacy settings further (e.g. incrementing the k value in k-Anonymity) will not change or improve the outcome (e.g. re-identification risk) considerably. This will be taken into account during the risk assessment process.

Several methods are available for assessing the risk of re-identification and any such method may be used in any embodiment. See, for example, Dankar FK, El Emam K, Neisa A, Roffey T, "Estimating the re-identification risk of clinical data sets", BMC Med Inform Decis Mak 2012; 12:66.

As an example, in general for an attacker who wants to identify a single entity given some background knowledge about a quasi-identifying attribute, the overall probability of re-identification can be computed as the minimum value of $1/f_i$ across all equivalence classes:

$$R = \frac{1}{\min(f_i)}$$

An equivalence class is defined to be a set of records that have the same values for the (anonymised) quasi-identifiers, whereas $f_i$ is the number of records in an equivalence class.

The computed re-identification risk will be specific to the type of analytics functions since they require a certain set of attributes (e.g. source IP, source hostname, etc.) to be available in the dataset. Furthermore it is also possible that the privacy/identity of more than one entity should be protected from a given dataset. For example, a complete Firewall log will contain data that may identify the source as well as the destination of the traffic. Each may have different privacy requirements that need to be satisfied, e.g. the destination entity may need a higher privacy protection level than the source entity. The re-identification risk for each type of entity should thus be computed separately. This means that there will be separate privacy scores for each type of entity, e.g. $P_{src}$, $P_{dst}$, etc.

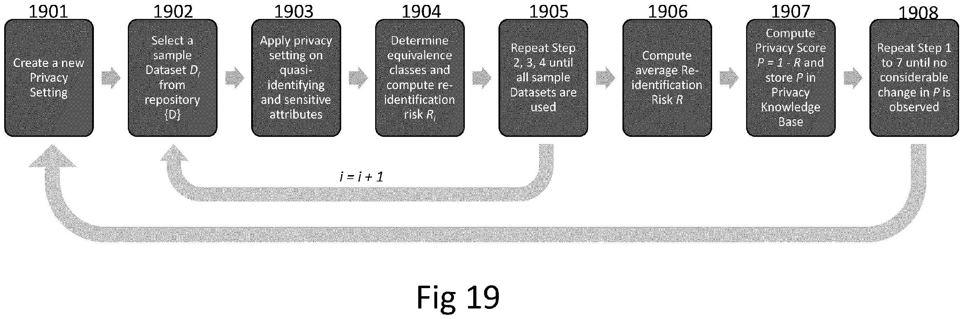

Figure 19 shows an example of a method for calculating the re-identification risks (and thus the privacy scores) for each analytics function.

At step 1901 a new privacy setting is created according to the procedure described earlier. It may start from the lowest privacy setting, e.g. in case of k-Anonymity the k value is set to 1.

At step 1902 a sample dataset $D_i$ is selected from repository $\{D\}$, where $i = 1$ to $n$ with $n$ being the total number of sample datasets in the repository. All the samples should be usable for the selected analytics function, i.e. they contain all the attributes required by the analytics function.

At step 1903 the quasi-identifying and sensitive attributes of each record are anonymised using the selected privacy setting.

At step 1904 equivalence classes are deter-

mined from the anonymised records and the re-identification risk $R_i$ is computed; as mentioned earlier more than one re-identification risk values may exist, with there being a re-identification risk provided for respective different attributes, e.g. $R_{src,i}$, $R_{dst,i}$, etc.

At step 1905, step 1902, 1903 and 1904 are repeated for the next sample dataset $D_{i=i+1}$ until $i = n$.

At step 1906 the overall re-identification risk $R$ can then be derived as the mean average over the computed re-identification risk values (i.e. $R_1 \dots R_n$) from all sample datasets $D_1 \dots D_n$.

At step 1907 the corresponding privacy score $P = 1 - R$ is then stored into the Privacy Knowledge Base for the selected privacy setting.

At step 1908 steps 1901 to 1907 are repeated again (i.e. with a new privacy setting) until no considerable change in the computed privacy scores can be observed any longer. In particular, steps 1901 to 1907 may be repeated until the change in computed privacy scores between successive iterations is below a threshold level.

The privacy score calculation is thus completed for a given analytics function. Additional privacy score calculations (using the same approach) are produced as needed for other analytics functions in case they require anonymisation for different sets of (quasi-identifying and sensitive) attributes. Otherwise they can share the same privacy scores for the corresponding privacy settings.

At this point privacy score(s) has been assigned to each privacy setting and analytics function, and populated in the Privacy Knowledge Base, as for example shown in Figure 11. The outstanding data utility scores then need to be calculated based on the quality of results produced by each analytics function. Since analytics functions may consume the (anonymised) data in different ways the observed data utility may be different too. Only one data utility score should be computed even if there are multiple privacy scores available.

The data utility can be calculated in any appropriate way. For example, it may be determined by comparing an analysis result with the (reference) result that could have been produced by the same analytics function if the anonymisation were switched off, i.e. no privacy setting was applied on any quasi-identifying and sensitive attributes. Analysis results can generally be expressed in *numerical* or *categorical* values. Examples of numerical values include *number of malicious hosts, percentage of infected machines, frequency of failed logins per hour,* etc. Examples of categorical values include *most attacked destination port of service, host or IP address with suspicious activities,* etc.

The *relative error* $\eta$ can be used as a measure to compare the results, where:

$$\eta = \left| 1 - \frac{v_{on}}{v_{off}} \right|$$

Value $v_{on}$ is the result obtained from anonymised data, and $v_{off} \neq 0$ is the (reference) result obtained from original data (i.e. without anonymisation).

In case of results with categorical values the relative error could measure the level of "blurriness" or inaccuracy caused by the anonymisation process, as described in the following example. Assume that an analytics function should identify the *IP address with suspicious activities* from input dataset. In the original data (without anonymisation) the analytics function may have identified an IP address that was shown or present in 50 records. But in the anonymised dataset there were 60 records associated with the (anonymised) IP address that has been determined as showing suspicious activities (e.g. due to the application of k-Anonymity model). In this case $v_{off}$ would then be set to 50 and $v_{on}$ set to 60 in order to compute the relative error $\eta$.

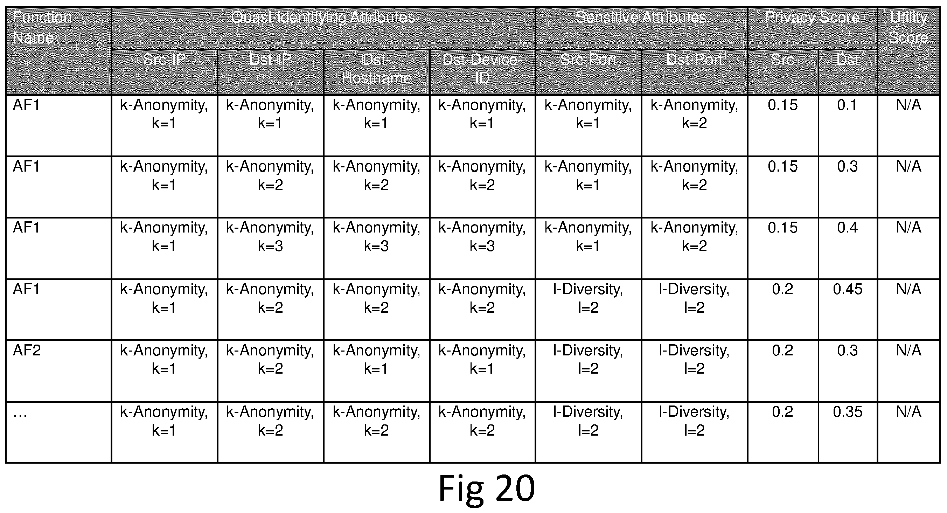

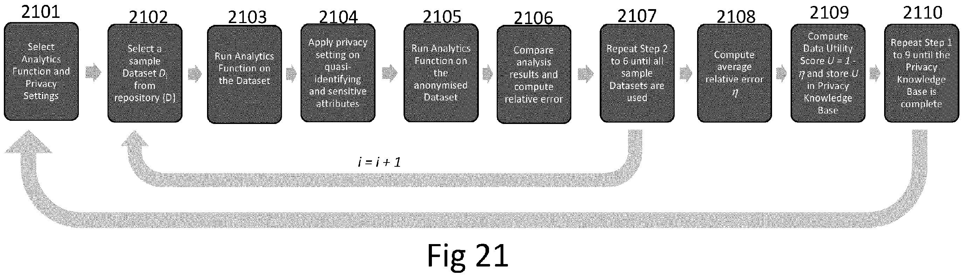

Using the (incomplete) Privacy Knowledge Base with populated privacy scores, such as the example of Figure 20, the data utility scores can be determined as shown in Figure 21:

At step 2101 a combination of analytics function and privacy setting is selected from the Privacy Knowledge Base table.

At step 2102 sample dataset $D_i$ is selected from the repository $\{D\}$, where $i = 1$ *to* $n$ with $n$ is the total number of sample datasets in the repository. The samples repository may be identical with the one used for calculating the privacy scores. Hence all the samples should be usable for the selected analytics function, i.e. they contain all the attributes required by the function.

At step 2103 the selected dataset with original values (not anonymised) is inputted to the analytics function to produce the result $v_{off,i}$.

At step 2104 the selected dataset is then anonymised by applying the privacy setting (i.e. choice of algorithms and parameters) on its quasi-identifying and sensitive attributes.

At step 2105 the anonymised dataset is then inputted to the analytics function to produce the result $v_{on,i}$.

At step 2106 the relative error $\eta_i$ is then computed as follows:

$$\eta_i = \left| 1 - \frac{v_{on,i}}{v_{off,i}} \right|$$

At step 2107 steps 2102 to 2106 are repeated for the next sample dataset $D_{i=i+1}$ until $i = n$.

At step 2108 the overall relative error $\eta$ can then be derived as the mean average over all the relative error values (i.e. $\eta_1 \dots \eta_n$) computed from sample datasets $D_1 \dots D_n$.

At step 2109 the corresponding data utility score $U = 1 - \eta$ is then stored into the Privacy Knowledge Base for the given combination of analytics function and privacy settings.

At step 2110 steps 2101 to 2109 are repeated again (i.e. with new combination of analytics function and privacy setting each time) until the entire Privacy Knowledge Base is complete, i.e. all the data utility scores are populated.

The main objective of using the Privacy Knowledge Base is to strike a good balance between privacy and utility, i.e. to achieve the highest possible privacy level at the least cost of data utility. In order facilitate this the completed Privacy Knowledge Base (PKB) can be further consolidated by adhering to the principle of inverse relationship between privacy and utility.

As an example, consolidation may be provided by the following method:

Step 1: each record represents a unique combination of analytics function, privacy setting, privacy score and utility score. The records are then grouped by their analytics function name or identifier.

Step 2: each group/list is sorted by the highest data utility scores first; the record with the highest utility score $U_{j=0} = U_{max}$ should have the lowest privacy score $P_{j=0} = P_{min}$ within the group, whereas $j = 0 ...$ m and m is the total number of all records in the group.

Step 3: for each of the subsequent records with decreasing or lower utility score $U_{j+1}$, the corresponding privacy score $P_{j+1}$ is compared with the preceding record's $P_j$. In case $P_{j+1} \leq P_j$ and $U_{j+1} \leq U_j$ that (subsequent) $(j + 1)$-th record is removed from the group as it contradicts against the inverse relationship principle.

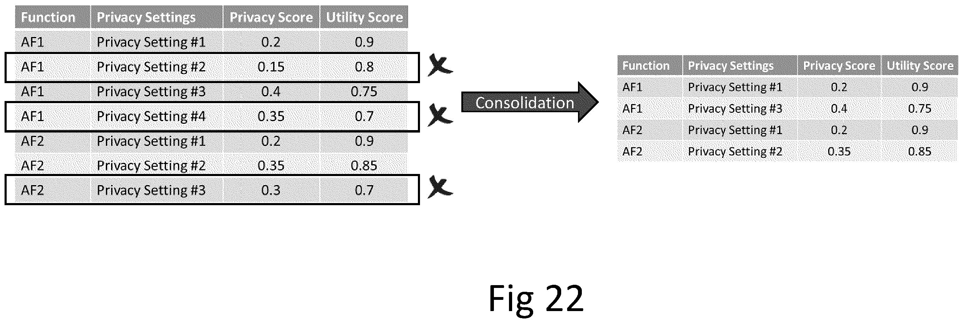

The consolidation procedure is performed through all the groups and records within the Privacy Knowledge Base. Figure 22 shows an example of a Privacy Knowledge Base before and after consolidation.

The same principle also applies if there are multiple privacy scores available for each unique combination. In this case the privacy scores comparison (step 3 above) should be done separately for each type of entity, e.g. $P_{src,j}$ compared with $P_{src,j+1}$. However only if the inverse relationship test failed for each type of entity, e.g. $P_{src,j+1} \leq P_{src,j}$ and $P_{dst,j+1} \leq P_{dst,j}$, the corresponding (subsequent) record is removed from the Privacy Knowledge Base.

Any of the embodiments described herein can be applied as a supplementary feature to known privacy models for configuring and tuning the models to ensure the results of analytics faithfully corresponds to input data while providing for privacy in the input data.

An example method for providing "Privacy Policy Recommendation" (PPR) will now be described that can be applied here to select the user data attributes that can be anonymised for a given analytics function.

In general a method provides a privacy policy recommendation for preserving acceptable level of data utility that is sufficient to enable useful analytics whilst modifying data in order to reduce privacy risk. A computer-implemented method is provided, the method comprising steps of: retrieving one or more analysis results, each of the one or more analysis results being generated by analysing an input dataset comprising one or more data attributes by performing one or more analytics functions, and each of the one or more data attributes having an anonymised format or a non-anonymised format; determining, for each of the analytics functions, the data attributes of a first type, the data attributes of the first type being a set of the one or more data attributes that need to have non-anonymised formats in order for the corresponding analysis result to have an acceptable level of accuracy and/or quality; and generating the privacy policy recommendation indicating, for each of the analytics function, that the data attributes of the first type need to be in non-anonymised formats.

Embodiments may therefore automatically generate a privacy policy recommendation based on which one or more data privacy policies may be modified, thereby simplifying the process of creating such data privacy policies which would otherwise be a complex manual process that often present difficulties to data policy creators (e.g. data policy officers). Such recommendations may, in turn, enable one or more data sources to share data to a data sharing and/or analytics platform in a manner that provides consistent privacy and confidentiality levels, and an optimal balance between privacy and data utility.

Various optional features of the method of creating a method for providing "Privacy Policy Recommendation" (PPR) may include:

1. Each of the one or more analysis results may be associated with a parameter indicating a level of accuracy and/or quality of the analysis results. The data attributes of the first type, for each of the analytics functions, may be determined by comparing the parameter associated with the corresponding analysis result with a predetermined threshold.

2. The input dataset may comprise input data retrieved from one or more data sources, the input data retrieved from each of the one or more data sources comprising one or more data attributes. The input data from at least one of the data sources may comprise security logs, such as Intrusion Detection System (IDS), WebProxy, and/or firewall logs.

3. Formats of at least one of the one or more data attributes of the input data from at least one of the one or more data sources may be determined based on one or more privacy policies, the formats being either anonymised or non-anonymised. At least one of the one or more privacy policies may be modified based on the privacy policy recommendation.

4. The data attributes of the first type, for each of the analytics functions, may be determined by performing steps comprising: determining data attributes used for the corresponding analytics function based on at least one analysis result generated at least in part by performing the corresponding analytic function; determining a data attribute format of each of the data attributes used for the corresponding analytics function; assigning a weight to each combination of the data attribute and data attribute format, wherein the weight indicates how frequently the corresponding combination of the data attribute and data attribute format was used to generate analysis results with an acceptable level of accuracy and/or quality; and determining the data attributes of the first type, for each of the analytics functions based on the weights assigned to the combinations of the data attributes and data attribute formats. The data attributes of the first type, for each of the analytics functions, may be determined by using a Restricted Boltzmann Machine (RBM).

5. Prior to performing the one or more analytics functions, data attributes that are not required for performing the corresponding analytics functions may be removed from the input dataset, wherein data attributes that are required for performing each of the analytics functions are defined by a set of known analytics functions requirements.

6. At least one of the analytics functions (alternatively known as analysis functions) may comprise one or more of: an aggregation function, such as grouping or average function, clustering and anomaly detection; and/or wherein at least one of the analytics functions are for determining a presence and/or type of: a potential and/or current cyber- security attack such as denial of service attack and communication with malicious external hosts.

7. The data attributes having the anonymised format may be generated by using one or more anonymisation techniques, such as masking, suppression, generalisation, and tokenisation.

8. The method may further comprise steps of: determining, for each of the analytics functions, the data attributes of a second type, the data attributes of the second type being a set of the one or more data attributes that do not need to have non-anonymised formats in order for the corresponding analysis result to have an acceptable level of accuracy and/or quality, wherein, the privacy policy recommendation further indicates, for each of the analytics functions, that: the data attributes of the second type do not need to be in non-anonymised formats, or, alternatively, the data attributes of the second type need to be in anonymised format.

Generally, embodiments for providing a PPR aim at protecting sensitive information and privacy of any individuals and/or organisations involved in the datasets that may be shared with one or more other organisations and/or one or more other units in the same organisation, while at the same time maintaining acceptable level of data utility for advanced analytics purposes. In general, one or more of the following issues of current data sharing and analytics platform are being addressed by embodiments:

a. Shared data can only be useful if its associated sharing policy matches the requirements of the analytics function consuming the data (also in aggregation).
b. Analytics function (i.e. its users/developers) may put higher requirements on the set of data attributes than it actually needed to produce its results.
c. Overly-high requirements of data attributes or data fields may prevent or discourage data owners (or data policy officer) to share their data.
d. The sharing and analytics platform becomes inflexible because of the "rigid" require-ments of the in-built analytics functions.
e. If the policy is too relaxed, e.g. all data attributes are available in plain text, the privacy of each individual or organisation included in the (shared) data may be at risk.
f. It is difficult for data owners to define optimal data privacy policies that strike the right balance between privacy/confidentiality and data utility.

Preferably, recommendation of effective data privacy policies for protecting sensitive information against unconsented disclosure may be provided by using a machine learning method.

A privacy policy recommendation engine (PPRE) may be implemented by the analytics platform 511, or it may be implemented by another computer system or in the cloud. One of the objectives of the PPRE is to strike the right balance between data privacy and data utility in order to allow security analysts to use the sanitised, shared datasets to produce acceptable analysis results (e.g. for cyber intelligence). This is because performing an analysis based on an anonymised input dataset does not necessarily prevent or reduce the quality of the analysis. For example, consider a firewall dataset that might be shared with both its source and destination IP address attributes presented in anonymised forms (e.g. using tokenisation method). If the objective of an analysis is to determine whether or not there has been a DDoS attack on any of the hosts, a security analyst may still be able to use the anonymised dataset to find the answer. Although the original source and destination IP address values have been re-placed with meaningless token values, each unique IP address was consistently mapped to the same, unique token value. This way the security analysts only needs to group the data points that are characterised by a high number of different token values as source IP and a single token value as destination IP for a certain period of time in order to determine the occurrence of a DDoS attack. Therefore, the PPRE aims to provide privacy policy recommendations which may, for example, be provided by producing data privacy policy templates, by using the following multi-step approach:

1. The PPRE may analyse similarities among the used analytics functions AF1, AF2, AF3, AF4, etc. in terms of their ability to produce acceptable results out of sanitised input datasets. An analytics function may either be a simple aggregation function such as grouping or average function, or more advanced such as clustering or anomaly detection. A sequence of mixed analytics functions may be considered another new analytics function (e.g. an advanced function to determine the type of potential denial of service attack).

2. The PPRE may observe and learn patterns from the analysis tasks carried out by different analysts or users (of the same or different organisations) when consuming the sanitised datasets in conjunction with various types of analytics functions. Optionally, human analysts may also be represented by a computer program which per-forms a sequence of mathematical and analytics functions to produce specific analysis results.

3. The PPRE may determine the optimal set of input data attributes either in plain text or anonymised forms that are required by relevant analytics functions to produce analysis results 513, 515, with different levels of accuracy and quality. An analysis result can be minimum and generic. For example, if only the timestamp attribute is provided in plain text and the others are anonymised (including source and destination IP) then the analytics function can only determine whether or not a distributed denial of service (DDoS) attack has happened. On the other hand, if more information such as packet size is also provided in plain text the type of DDoS attack can then be determined, e.g. "ICMP DDoS".

4. The PPRE may provide recommendations of effective privacy policy 521. One or more recommendations of effective privacy policy may be provided for each type of data (e.g. security logs) as the importance and sensitivity of each data attribute such as source IP or source port may not always be the same for different type of security logs such as IDS or WebProxy logs. Therefore, different privacy and confidentiality settings may need to be applied to the same data attributes provided by different data sources.

Optionally, the PPRE may employ a machine learning algorithm to learn the links and relationships among the presented data attributes of different security logs and the respective analysis results through the observation of analysis tasks performed by multiple analysts and analytics functions. In particular, the algorithm may learn the weights applicable to the utilisation of each data attribute (either in plain text or anonymised form) that lead to specific analysis outcomes. In such cases, a trained machine learning model would eventually be able to reflect the fact that the higher the weight assigned to a specific data attribute (e.g. source IP) presented in specific form, the more frequently that attribute has been used to produce results with certain accuracy (i.e. the attribute has higher impact and significance on those results).

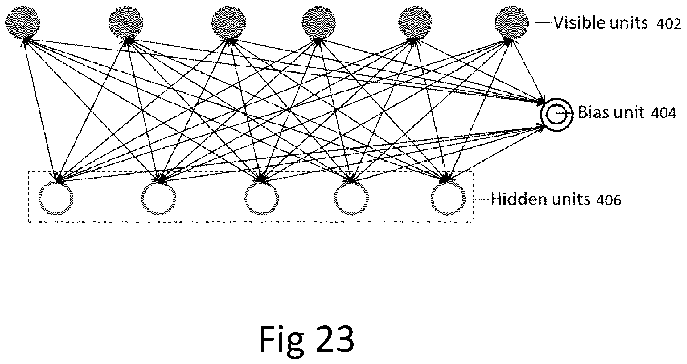

The PPRE may be implemented by using a Restricted Boltzmann Machine (RBM) such as shown in Figure 23. The RBM is a stochastic neural network, i.e. a network of neurons where each neuron has some random behaviour when activated. It consists of one layer of visible units (neurons) 402, one layer of hidden units 406 and a bias unit 404. Each visible unit 402 is connected to all the hidden units 406 (this connection is undirected, so each hidden unit 406 is also connected to all the vis-ible units 402), and the bias unit 404 is connected to all the visible and hidden units 402, 406. The bias unit 404 is used to allow other units 402, 406 to learn an appropriate threshold. As shown in an exemplary illustration of the RBM in Figure 23, no visible unit 402 is connected to any other visible unit 402 and no hidden unit 406 is connected to any other hidden unit 406. After successful learning, the RBM can provide a closed-form representation of the distribution underlying the training data.

RBMs have found applications in dimensionality reduction, classification, collaborative filtering, feature learning and topic modelling. In the context of the present embodiments, the PPRE may use a RBM for collaborative filtering which is the process of filtering for information or patterns using techniques involving collaboration among multiple agents, viewpoints, data sources, etc. In such cases, the visible units 402 correspond to the utilisation of data attributes of each type of security logs presented in specific form (plain text or anonymised) that have been observed from analysis tasks performed by the analysts. The hidden units 406 represent the latent factors underlying the observed data utilisation. The PPRE may be configured to learn these latent units and correspond them with the different types and level(s) of accuracy, quality and/or accuracy of analysis results.

Optionally, at least one parameter indicating level of accuracy and/or quality of an analysis result 216 may be used. Optionally, such a parameter may indicate a level of accuracy of an analysis result 216 by indicating if an analysis result 216 correctly indicates a presence of a potential and/or current cyber-security attack (e.g. denial of service attack) and/or communication with one or more malicious external hosts. For example, the parameter may be in a numerical form, and the parameter may have a higher value to indicate a higher level of accuracy, and a lower value to indicate a lower level of accuracy. Alternatively, the parameter may be in a non-numerical form (e.g. accurate, likely to be accurate, inaccurate, likely to be inaccurate, and/or not-known).

Optionally, such a parameter may indicate a level of quality of an analysis result 216 by indicating a level of details included in the analysis result 216. Optionally, the parameter may be in a numerical form, and the parameter may have a higher value to indicate a higher level of quality, and a lower value to indicate a lower level of quality. For example, an analysis with a mere indication of a presence of a potential and/or current cyber-security attack only (e.g. indicating a DDoS attack in the network without indicating the target host/IP address) may have a lower parameter value than an analysis with further details (e.g. type of the DDos attack, target host/IP address, and/or geo-location of an attack target) of a potential and/or current cyber-security at-tack alongside an indication of a presence of the attack. Similarly. an analysis with a lower level of details (e.g. general geo-location of an attack target) may have a lower parameter value than an analysis with a higher level of details (e.g. an exact address of the attack target).

Optionally, one or more parameters may be in a form of an array (e.g. a matrix) having one or more elements included therein. In such cases, the elements may comprise at least one element for indicating a presence of a potential and/or current cyber-security attack and/or at least one element for indicating a level of details included in the analysis result 216. Optionally, a plurality of elements for indicating levels of details of different types of details of the attack may be included in such an array.

Optionally, the accuracy and/or quality of an analysis result 216 may be determined by receiving an input from an analyst. In such cases, the analyst may input one or more parameters indicating levels of accuracy, quality and/or accuracy of corresponding analysis results 216. Alter-natively, the accuracy and/or quality of an analysis result 216 may be determined automatically by using a computer program and/or a machine learning method by comparing one or more analysis results 216 and/or one or more data logs of known events.

Optionally, an analysis results 216 may be determined to have acceptable level(s) of accuracy, quality and/or accuracy analysis results 216 if the corresponding parameter(s) associated with the analysis results 216 exceed a threshold. Such a threshold may be predetermined or deter-mined by using a machine learning method (e.g. RMB).

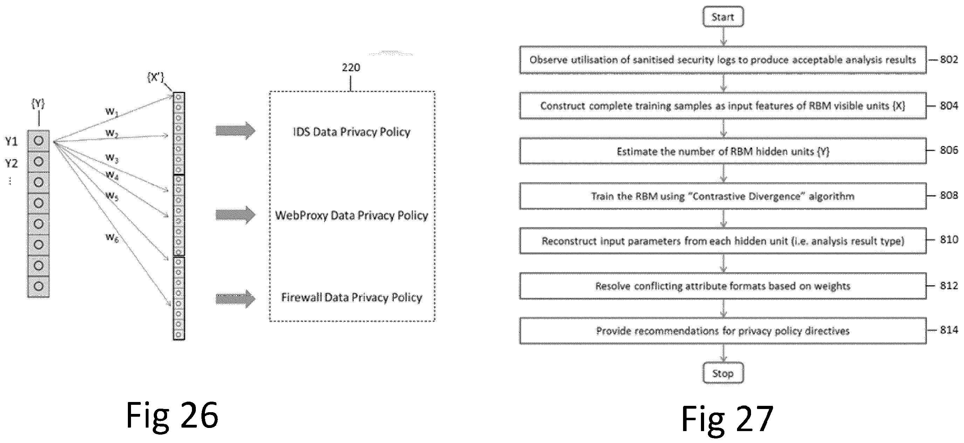

Figure 27 is a flow chart illustrating an exemplary steps of the PPRE implementation for training its RBM and, eventually, for providing policy recommendations, which will be described below in detail in relation to Figures 23 to 26. The observation 802 and the subsequent training steps 804, 806, 808, 810, 812 may be repeated regularly (e.g. once a month) and/or when any significant changes have been made in the sharing and analytics platform (e.g. new types of security logs or analytics functions being introduced to support new types of analysis or improve existing ones).

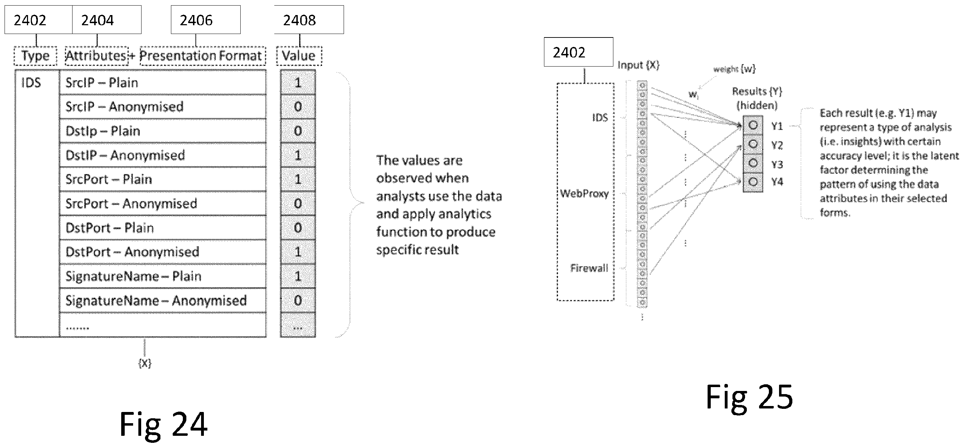

Figure 24 shows an example of a training sample for an IDS security log. Each training dataset or sample {X} (i.e. input features for the visible units 402) may comprise a list of presented attributes 2404 for a specific security log 2402 (e.g. IDS log). Optionally, the analytics functions requirements that may have been provided to the data analytics platform may have already been taken into account when ingesting the datasets into the platform. This way any redundant attributes can be removed from the dataset at the beginning of the process in order to optimise the resource allocation within the platform. Each remaining data attribute 2404 may be paired with its presentation format 2406 as it was consumed by the analytics function. In other words, the format shows whether the corresponding data attribute 2406 was provided in a non-anonymised format (e.g. plain text) or anonymised format (e.g. as specified by the associated data policy). The binary values 2408 may be assigned to each attribute-format pair to indicate if the corresponding combination (i.e. the corresponding pair of data attribute 2404 presentation format 2406) has been used for the analytics function. In principle, for each training sample the data attribute of specific type of log may only be consumed in one way (i.e. either in plain text or anonymised form).

The input features (i.e. data attribute 2404-presentation format 2406 pairs) for different types 2402 of security logs (e.g. IDS, WebProxy, Firewall, etc.) may then be combined together to a complete training sample representing the RBM visible units 402. In case the observed analysis task does not consume a specific type of security log, zero values will be assigned to the respective attribute-format pairs. Figure 25 shows an example of the RBM with utilisation of three types 2402 of security logs as visible units {X} and four hidden units {Y} which correspond to four types of analysis results. In some cases, at least some of the analysis results may be of the same type or similar types. For example, some of the analysis results may be of the same type with different levels of accuracy and/or quality (e.g. "ICMP DDoS" vs "General DDoS" attacks). Therefore, the hidden units {Y} may also represent the different levels of accuracy and/or quality of the corresponding analysis. As shown in Figure 25 a weight vector {w} may be used to indicate how significant each of the data attributes of its selected presentation format contributes to each analysis result or level of accuracy and/or quality. A RBM training phase for determining the weight vector {w} is described below.

The number of hidden units (four (Y1-Y4) in the example shown in Figure 25) may represent the number of different types of analysis results as well as their accuracy levels. This number can, for example, be collectively obtained from the analysts by asking them to indicate the type and accuracy of results (e.g. attack family/classification being identified, services being targeted, etc.) from a given list each time they completed the analysis tasks.

In order to train the RBM, an algorithm known as Contrastive Divergence Learning may optionally be used. Contrastive Divergence Learning performs a number of iterations to compute the states of hidden units 406 based on the states of visible units 402, and vice versa. The states of visible units 402 are reconstructed from the hidden units 406. The number of iterations increases with learning steps to achieve better accuracy. The number of hidden units 406 is estimated at the start of training phase and may also increase to achieve better accuracy.

An estimation of the number of hidden units 406 may be based on the number of available analysis results. The precise implementation may depends on how the analytics platform is de-signed and implemented and it is also possible that the number of analysis result types are fixed. Otherwise, an educated guess of the number (i.e. a likely small number) could be used as start-ing point at the beginning of the training while calculating the weights in the RBM. In a number of training iterations the number can be increased gradually to see if there is any significant change in the mean reconstruction loss/error (when {Y} is being reconstructed to {X}). If the reconstruction error is still too high it would mean that there are not enough hidden units in the model. Having too few hidden units will give poor prediction/accuracy while having too many units will overfit the training data. One method/algorithm that could be used to estimate the right number of hidden units is the "Projection Pursuit" method as described in "Y. Freund, D. Haussler: Unsupervised learning of distributions on binary vectors using two layer networks. 1991". NIPS (NeurIPS) 2 December 1991.

The trained RBM may generate a model for the joint probability distribution of all inputs consisting of features set {X}. The model may be a stochastic model which is a tool for estimating probability distributions of potential outcomes by allowing for random variation in one or more inputs over time. The stochastic model is mainly represented by the computed weights {w} of the connections between visible and hidden units 402, 406. Each hidden unit (i.e. Y1, Y2, etc.) may then be used to reconstruct the set of input features that have activated a corresponding hidden unit as illustrated in Figure 26. The weights {w} give indication of the significance of at-tribute-format pair on the result. Hence, if the reconstruction has resulted in the same attribute name being paired both formats (e.g. Source IP address of an IDS log being in plain text and anonymised form) the one with a higher weight is chosen. The final set of reconstructed input parameters may then be used to generate one or more privacy policy recommendations 220 (e.g. in the form of data privacy policy templates) recommending which data attributes of the associated security log should be shared in a non-anonymised format (e.g. plain text) or an anonymised format in order to produce an analysis result with certain level(s) of accuracy and/or quality.

As illustrated in Figure 26 the reconstructed input parameters {X'} are reconstructed depending on the hidden unit {Y} selected. This means that the PPRE may generate different policy recommendations 220 for each type of analysis result. The data sharing and analytics platform may enforce such multiple policy directives to better protect the privacy and confidentiality of the data owners by revealing the sensitive information on an "as-needed" basis (i.e. to allow higher level of granularity of protection). This may be implemented by providing encryption when the original data are stored in the platform. Whenever the data is requested by an analyst to produce certain results the associated policy directives may apply any necessary privacy measures (e.g. anonymisation, attributes removal) on the sensitive data before making them available to the relevant analytics functions.

It will be understood by those skilled in the art that the apparatus that embodies the invention could be a general purpose device (or group of devices) having software arranged to provide an embodiment of the invention. Furthermore, any or all of the software used to implement the invention can be contained on various storage mediums such as a floppy disc, CD-ROM, or magnetic tape so that the program(s) can be loaded onto one or more general purpose devices, or could be downloaded over a network.

The computer-implemented method described above may be implemented in a form of computer program. The computer program may be stored in at least one memory of at least one computer system. The computer system may also comprise at least one processor configured to perform the computer program. Optionally, the computer system may be connected to and/or form a part of the computer network.

## Claims

1. A computer implemented method for performing privacy controlled data analytics, the method being performed by a computer system configured to provide incoming anonymized data to a plurality of different analysis functions for analyzing the data, each analysis function having its own set of requirements for data attributes that need to be available in the incoming data, the incoming data originating from a plurality of data sources and being anonymized by applying one or more of a plurality of predetermined anonymization protocols;
the method comprising:

   - determining one or more attributes present in the incoming data that will be processed by the computer system;
   - determining the analysis functions that are capable of being implemented based on the determined one or more attributes of the incoming data and the data attribute requirements for the analysis functions;
   - determining the data attributes of the incoming data that can be anonymised whilst preserving data utility based on the requirements of the analysis functions;

- determining, for each of a plurality of privacy settings, a privacy score and a data utility score, each privacy setting comprising a unique combination of analysis function, anonymization protocol applied to the data, anonymization protocol parameter value and data attribute;

- receiving input selecting a desired privacy setting; and

- processing an anonymized set of data, anonymized according to an identified anonymization protocol, according to the analysis function associated with the selected privacy setting.

2. The method of claim 1 wherein determining one or more attributes present in the incoming data that will be processed by the computer system comprises: querying a device database to retrieve the data attribute details for the data sources, the device database containing information about a plurality of devices that can be used as data sources.

3. The method of claim 2, the method further comprising:

   receiving sample data from each of the data sources;
   using the information retrieved from the device database to parse and extract the attributes from the received sample data;
   creating a structured version of the data attributes that uses the same format and/or syntax for data attributes across different types of device, the structured version of the data attributes being used to transform incoming data from any of the data sources into a structured version with common format and/or syntax for use as input data for the analysis functions.

4. The method of any preceding claim wherein determining the analysis functions that are capable of being implemented comprises:

   determining the presence of one or more types of devices that are acting as data sources and determining the associated data attributes available from these devices;
   determining, for each analysis function, whether the data attributes necessary to implement the analysis function are present in the incoming data based on the data attributes available from the one or more types of devices.

5. The method of claim 4 wherein the data attributes from the one or more types of devices are aggregated.

6. The method of any preceding claim wherein determining the data attributes of the incoming data that can be anonymised whilst preserving data utility based on the requirements of the analysis functions comprises:

   obtaining, for each data attribute, data indicative of whether the data attribute can be anonymised whilst preserving data utility based on the requirements of the analysis functions;
   receiving, for each data attribute, data indicative of its data sensitivity classification;

7. The method of claim 6 wherein receiving, for each data attribute, data indicative of its data sensitivity classification comprises receiving data tagging each data attribute as Identifying, Quasi-identifying, Sensitive or Insensitive based on pre-knowledge about the associated data source.

8. The method of any preceding claim wherein determining the data attributes of the incoming data that can be anonymised based on the requirements of the analysis functions comprises:

   retrieving one or more analysis results,

      each of the one or more analysis results being generated by analysing an input dataset comprising one or more data attributes by performing one or more of the analysis functions, and
      each of the one or more data attributes having an anonymised format or a non-anonymised format;

   determining, for each of the analysis functions, the data attributes of a first type,
   the data attributes of the first type being a set of the one or more data attributes that need to have non-anonymised formats in order for the corresponding analysis result to have an acceptable level of accuracy and/or quality; and
   generating a privacy policy recommendation indicating, for each of the analytics function, that the data attributes of the first type need to be in non-anonymised formats.

9. The method of any preceding claim wherein determining, for each of a plurality of privacy settings, a privacy score comprises:

   receiving representative sample datasets from different data sources;
   grouping the representative sample datasets according to the input data requirements for each analysis function;
   applying each privacy setting to the corresponding anonymisable attributes; and
computing the re-identification risk, R, based on the statistic distribution of the relevant data attribute values within the sample datasets and determining the privacy score based on the re-identification risk.

10. The method of any preceding claim wherein determining, for each of a plurality of privacy settings, a data utility score comprises:

    receiving representative sample datasets from different data sources;
    applying each privacy setting to the sample datasets that are relevant for each analysis function;
    inputting the anonymised datasets to the analysis functions.

11. The method of claim 10 wherein determining a data utility score comprises, for each analysis function and each corresponding privacy setting:
comparing an analysis result with a reference result that would have been produced by the same analysis function if no privacy setting was applied.

12. The method of any preceding claim wherein receiving input selecting a desired privacy setting comprises:

    displaying data indicative of the privacy score and associated data utility score for each of a plurality of privacy settings for one or more analysis functions; and
    receiving user input selecting a privacy setting to use for each of one or more analysis functions.

13. The method of claim 12 further comprising:

    associating a data utility score threshold with each analysis function;
    adjusting the combinations of analysis functions and privacy settings available for user selection based on whether said combinations are above or below the associated data utility score threshold.

14. A computer system configured to perform the method of any of claims 1 to 13.

15. A non-transitory computer readable medium having stored thereon a computer program that, when run on a system according to claim 14, causes the system to perform the method of any of claims 1 to 13; and/or a computer program that, when run on a system according to claim 14, causes the system to perform the method of any of claims 1 to 13.

| Data type | Attribute | Visibility |
|---|---|---|
| IP Camera Traffic Log | SrcIP | A |
| | DestIP | P |
| | SrcPort | A |
| | DstPort | P |
| | SrcMAC | A |
| PC Traffic Log | SrcIP | P |
| | DestIP | A |
| | DestURL | A |
| | BytesOut | P |
| | BytesIn | P |

**P**: Shared in plaintext     **A**: Shared in anonymised form

# Fig 1

## Original Patients Data

| | ZIP Code | Age | Disease |
|---|---|---|---|
| 1 | 47677 | 29 | Heart Disease |
| 2 | 47602 | 22 | Heart Disease |
| 3 | 47678 | 27 | Heart Disease |
| 4 | 47905 | 43 | Flu |
| 5 | 47909 | 52 | Heart Disease |
| 6 | 47906 | 47 | Cancer |
| 7 | 47605 | 30 | Heart Disease |
| 8 | 47673 | 36 | Cancer |
| 9 | 47607 | 32 | Cancer |

## Anonymized Patients Data

| | ZIP Code | Age | Disease |
|---|---|---|---|
| 1 | 476** | 2* | Heart Disease |
| 2 | 476** | 2* | Heart Disease |
| 3 | 476** | 2* | Heart Disease |
| 4 | 4790* | $\geq 40$ | Flu |
| 5 | 4790* | $\geq 40$ | Heart Disease |
| 6 | 4790* | $\geq 40$ | Cancer |
| 7 | 476** | 3* | Heart Disease |
| 8 | 476** | 3* | Cancer |
| 9 | 476** | 3* | Cancer |

201

203

# Fig 2

| Privacy Model | Identity Disclosure Protection | Attribute Disclosure Protection | Membership Disclosure Protection |
|---|---|---|---|
| k-Anonymity | ✓ | | |
| l-Diversity | | ✓ | |
| t-Closeness | | ✓ | |
| $(\varepsilon,\delta)$-Differential Privacy | | | ✓ |
| β-Likeness | | ✓ | |
| δ-Presence | | | ✓ |

Fig 3

Fig 4

EP 4 407 497 A1

Fig 5

Fig 6

Start

601 Learn about the type, format and structure of the data

602 Determine available analytics functions

603 Select data attributes for anonymisation

604 Construct/update a customised Privacy Knowledge Base

New data source?

Y

N

End

EP 4 407 497 A1

701 — Device information
(type, model)

703 — Sample data
(structured or unstructured)

705

Analytics Platform
Data Parsing
Engine

707

Data format
details

Query by device
type & model

Device Database    523

| timestamp | src_ip | src_MAC | dest_ip | dest_url | packet_out | ... |
|-----------|--------|---------|---------|----------|------------|-----|
|           |        |         |         |          |            |     |
|           |        |         |         |          |            |     |
|           |        |         |         |          |            |     |
|           |        |         |         |          |            |     |
|           |        |         |         |          |            |     |

709

Structured version of the data
w/ consistent attribute names

Attributes
Mapping
Information

System Database    711

Fig 7

Fig 8

Fig 9

P: Plaintext required
A: Anonymisable

Data sensitivity classification

Device Database

QI: Quasi-Identifying
S: Sensitive
Is: Insensitive

EP 4 407 497 A1

Fig 10

Fig 11

| Function | Privacy Setting | Privacy Score | Data Utility Score |
|----------|-----------------|---------------|--------------------|
| AF1 | Setting #1.1 | 0.2 | 0.85 |
| AF1 | Setting #1.2 | 0.4 | 0.75 |
| AF1 | Setting #1.3 | 0.5 | 0.5 |
| AF1 | Setting #1.4 | 0.75 | 0.35 |
| AF3 | Setting #3.1 | 0.25 | 0.8 |
| AF3 | Setting #3.2 | 0.5 | 0.65 |
| AF3 | Setting #3.3 | 0.6 | 0.5 |
| AF3 | Setting #3.4 | 0.7 | 0.25 |

## Fig 12

## Fig 13

EP 4 407 497 A1

Fig 14

| Function Name | Quasi-identifying | Sensitive | Privacy Score | Data Utility Score |
|---|---|---|---|---|
| Analytics Function 1 | k-Anonymity, k=5 | l-Diversity, l=4 | 0.7 | 0.4 |
| Analytics Function 1 | k-Anonymity, k=4 | l-Diversity, l=4 | 0.5 | 0.5 |
| Analytics Function 1 | k-Anonymity, k=3 | l-Diversity, l=3 | 0.35 | 0.7 |
| Analytics Function 2 | k-Anonymity, k=5 | l-Diversity, l=4 | 0.8 | 0.5 |
| Analytics Function 2 | k-Anonymity, k=4 | l-Diversity, l=4 | 0.5 | 0.7 |

# Fig 15

EP 4 407 497 A1

| Function Name | Quasi-identifying Attributes | | | | Sensitive Attributes | | Privacy Score | Data Utility Score |
|---|---|---|---|---|---|---|---|---|
| | Src-IP | Dst-IP | Dst-Hostname | Dst-Device-ID | Src-Port | Dst-Port | | |
| AF 1 | k=1 | k=5 | k=5 | k=5 | l=2 | l=3 | 0.7 | 0.4 |
| AF 1 | k=1 | k=4 | k=4 | k=4 | l=2 | l=3 | 0.55 | 0.5 |
| AF 1 | k=1 | k=5 | k=5 | k=5 | l=2 | l=4 | 0.5 | 0.55 |
| AF 1 | k=1 | k=4 | k=4 | k=4 | l=2 | l=4 | 0.4 | 0.6 |
| AF 2 | k=1 | k=3 | k=3 | k=3 | l=2 | l=3 | 0.5 | 0.5 |
| AF 2 | k=1 | k=2 | k=2 | k=2 | l=2 | l=4 | 0.4 | 0.7 |

# Fig 16

EP 4 407 497 A1

Fig 17

Overall score table based on analytics functions and sample data

| Function | Quasi-identifying | Sensitive | Privacy Score | Data Utility Score |
|---|---|---|---|---|
| Analytics Function 1 | k-Anonymity, k=5 | l-Diversity, l=4 | 0.7 | 0.4 |
| Analytics Function 1 | k-Anonymity, k=4 | l-Diversity, l=4 | 0.5 | 0.5 |
| Analytics Function 1 | k-Anonymity, k=4 | l-Diversity, l=3 | 0.4 | 0.6 |
| Analytics Function 1 | k-Anonymity, k=3 | l-Diversity, l=3 | 0.35 | 0.7 |
| Analytics Function 2 | k-Anonymity, k=5 | l-Diversity, l=4 | 0.8 | 0.5 |
| Analytics Function 2 | k-Anonymity, k=4 | l-Diversity, l=4 | 0.5 | 0.7 |

| No | Quasi-identifying Attributes | | | | Sensitive Attributes | |
|---|---|---|---|---|---|---|
| | Src-IP | Dst-IP | Dst-Hostname | Dst-Device-ID | Src-Port | Dst-Port |
| 1 | k-Anonymity, k=1 | k-Anonymity, k=1 | k-Anonymity, k=1 | k-Anonymity, k=1 | k-Anonymity, k=1 | k-Anonymity, k=1 |
| 2 | k-Anonymity, k=1 | k-Anonymity, k=2 | k-Anonymity, k=1 | k-Anonymity, k=1 | k-Anonymity, k=1 | k-Anonymity, k=1 |
| 3 | k-Anonymity, k=1 | k-Anonymity, k=2 | k-Anonymity, k=2 | k-Anonymity, k=1 | k-Anonymity, k=1 | k-Anonymity, k=1 |
| 4 | k-Anonymity, k=1 | k-Anonymity, k=1 | k-Anonymity, k=1 | k-Anonymity, k=1 | l-Diversity, l=1 | l-Diversity, l=1 |
| 5 | k-Anonymity, k=1 | k-Anonymity, k=2 | k-Anonymity, k=1 | k-Anonymity, k=1 | l-Diversity, l=2 | l-Diversity, l=2 |
| ... | k-Anonymity, k=1 | k-Anonymity, k=2 | k-Anonymity, k=2 | k-Anonymity, k=2 | l-Diversity, l=2 | l-Diversity, l=2 |

# Fig 18

Fig 19

EP 4 407 497 A1

| Function Name | Quasi-identifying Attributes | | | | Sensitive Attributes | | Privacy Score | | Utility Score |
|---|---|---|---|---|---|---|---|---|---|
| | Src-IP | Dst-IP | Dst-Hostname | Dst-Device-ID | Src-Port | Dst-Port | Src | Dst | |
| AF1 | k-Anonymity, k=1 | k-Anonymity, k=1 | k-Anonymity, k=1 | k-Anonymity, k=1 | k-Anonymity, k=1 | k-Anonymity, k=2 | 0.15 | 0.1 | N/A |
| AF1 | k-Anonymity, k=1 | k-Anonymity, k=2 | k-Anonymity, k=2 | k-Anonymity, k=2 | k-Anonymity, k=1 | k-Anonymity, k=2 | 0.15 | 0.3 | N/A |
| AF1 | k-Anonymity, k=1 | k-Anonymity, k=3 | k-Anonymity, k=3 | k-Anonymity, k=3 | k-Anonymity, k=1 | k-Anonymity, k=2 | 0.15 | 0.4 | N/A |
| AF1 | k-Anonymity, k=1 | k-Anonymity, k=2 | k-Anonymity, k=2 | k-Anonymity, k=2 | l-Diversity, l=2 | l-Diversity, l=2 | 0.2 | 0.45 | N/A |
| AF2 | k-Anonymity, k=1 | k-Anonymity, k=2 | k-Anonymity, k=1 | k-Anonymity, k=1 | l-Diversity, l=2 | l-Diversity, l=2 | 0.2 | 0.3 | N/A |
| ... | k-Anonymity, k=1 | k-Anonymity, k=2 | k-Anonymity, k=2 | k-Anonymity, k=2 | l-Diversity, l=2 | l-Diversity, l=2 | 0.2 | 0.35 | N/A |

# Fig 20

2101 Select Analytics Function and Privacy Settings

2102 Select a sample Dataset $D_i$ from repository [D]

2103 Run Analytics Function on the Dataset

2104 Apply privacy setting on quasi-identifying and sensitive attributes

2105 Run Analytics Function on the anonymised Dataset

2106 Compare analysis results and compute relative error

2107 Repeat Step 2 to 6 until all sample Datasets are used

2108 Compute average relative error $\eta$

2109 Compute Data Utility Score $U = 1 - \eta$ and store $U$ in Privacy Knowledge Base

2110 Repeat Step 1 to 9 until the Privacy Knowledge Base is complete

$i = i + 1$

Fig 21

| Function | Privacy Settings | Privacy Score | Utility Score |
|----------|------------------|---------------|---------------|
| AF1 | Privacy Setting #1 | 0.2 | 0.9 |
| AF1 | Privacy Setting #2 | 0.15 | 0.8 |
| AF1 | Privacy Setting #3 | 0.4 | 0.75 |
| AF1 | Privacy Setting #4 | 0.35 | 0.7 |
| AF2 | Privacy Setting #1 | 0.2 | 0.9 |
| AF2 | Privacy Setting #2 | 0.35 | 0.85 |
| AF2 | Privacy Setting #3 | 0.3 | 0.7 |

Consolidation

| Function | Privacy Settings | Privacy Score | Utility Score |
|----------|------------------|---------------|---------------|
| AF1 | Privacy Setting #1 | 0.2 | 0.9 |
| AF1 | Privacy Setting #3 | 0.4 | 0.75 |
| AF2 | Privacy Setting #1 | 0.2 | 0.9 |
| AF2 | Privacy Setting #2 | 0.35 | 0.85 |

# Fig 22

Visible units 402

Bias unit 404

Hidden units 406

Fig 23

| 2402 | 2404 | 2406 | 2408 |

| Type | Attributes + Presentation Format | Value |
|------|----------------------------------|-------|
| IDS | SrcIP – Plain | 1 |
| | SrcIP – Anonymised | 0 |
| | DstIp – Plain | 0 |
| | DstIP – Anonymised | 1 |
| | SrcPort – Plain | 1 |
| | SrcPort – Anonymised | 0 |
| | DstPort – Plain | 0 |
| | DstPort – Anonymised | 1 |
| | SignatureName – Plain | 1 |
| | SignatureName – Anonymised | 0 |
| | ........ | ... |

{X}

The values are observed when analysts use the data and apply analytics function to produce specific result

Fig 24

2402

Input {X}   weight {w}

IDS   w₁   Results {Y} (hidden)

WebProxy   Y1

Firewall   Y2   Y3   Y4

Each result (e.g. Y1) may represent a type of analysis (i.e. insights) with certain accuracy level; it is the latent factor determining the pattern of using the data attributes in their selected forms.

Fig 25

EP 4 407 497 A1

Fig 26

Fig 27

EP 4 407 497 A1

Europäisches Patentamt
European Patent Office
Office européen des brevets

# EUROPEAN SEARCH REPORT

Application Number

EP 23 15 0284

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2019/266353 A1 (GKOULALAS-DIVANIS ARIS [US]) 29 August 2019 (2019-08-29) * paragraphs [0036], [0038], [0039], [0040] - [0044], [0047], [0053] * ----- | 1-15 | INV. G06F21/62 H04L9/40 |
| X | US 2019/332807 A1 (LAFEVER MALCOLM GARY [US] ET AL) 31 October 2019 (2019-10-31) * paragraph [0574] * ----- | 1-4,9, 10,14,15 | |
| X | WO 2020/222140 A1 (ERICSSON TELEFON AB L M [SE]; JARRAYA YOSR [CA] ET AL.) 5 November 2020 (2020-11-05) * paragraphs [0089] - [0093] * ----- | 1,14,15 | |
| A | EP 3 166 053 A1 (PALO ALTO RES CT INC [US]) 10 May 2017 (2017-05-10) * paragraphs [0040] - [0046] * ----- | 2-4,9,10 | |

**TECHNICAL FIELDS SEARCHED (IPC)**

G06F
H04L

The present search report has been drawn up for all claims

| Place of search | Date of completion of the search | Examiner |
|---|---|---|
| Munich | 20 June 2023 | Frank, Mario |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

...................................................................
& : member of the same patent family, corresponding document

EPO FORM 1503 03.82 (P04C01)

**EP 4 407 497 A1**

## ANNEX TO THE EUROPEAN SEARCH REPORT
## ON EUROPEAN PATENT APPLICATION NO.

EP 23 15 0284

This annex lists the patent family members relating to the patent documents cited in the above-mentioned European search report.
The members are as contained in the European Patent Office EDP file on
The European Patent Office is in no way liable for these particulars which are merely given for the purpose of information.

20-06-2023

| Patent document cited in search report | | | Publication date | Patent family member(s) | | | Publication date |
|---|---|---|---|---|---|---|---|
| US | 2019266353 | A1 | 29-08-2019 | US | 2019266353 | A1 | 29-08-2019 |
| | | | | US | 2019303618 | A1 | 03-10-2019 |
| US | 2019332807 | A1 | 31-10-2019 | US | 2019332807 | A1 | 31-10-2019 |
| | | | | US | 2022012364 | A1 | 13-01-2022 |
| WO | 2020222140 | A1 | 05-11-2020 | US | 2022215127 | A1 | 07-07-2022 |
| | | | | WO | 2020222140 | A1 | 05-11-2020 |
| EP | 3166053 | A1 | 10-05-2017 | EP | 3166053 | A1 | 10-05-2017 |
| | | | | JP | 6814017 | B2 | 13-01-2021 |
| | | | | JP | 2017091515 | A | 25-05-2017 |
| | | | | KR | 20170052464 | A | 12-05-2017 |
| | | | | US | 2017124336 | A1 | 04-05-2017 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **DANKAR FK ; EL EMAM K ; NEISA A ; ROFFEY T.** Estimating the re-identification risk of clinical data sets. *BMC Med Inform Decis Mak,* 2012, vol. 12, 66

- **Y. FREUND ; D. HAUSSLER.** Unsupervised learning of distributions on binary vectors using two layer networks. 1991. *NIPS (NeurIPS),* 02 December 1991